(19) Europäisches Patentamt
European Patent Office
Office européen des brevets

(11) **EP 1 499 154 B1**

(12) **FASCICULE DE BREVET EUROPEEN**

(45) Date de publication et mention
de la délivrance du brevet:
**16.11.2016 Bulletin 2016/46**

(51) Int Cl.:
*G08B 25/00* (2006.01)        *G08B 25/10* (2006.01)
*H04W 52/02* (2009.01)        *H04W 74/02* (2009.01)

(21) Numéro de dépôt: **04360056.8**

(22) Date de dépôt: **04.06.2004**

(54) **Procédé de communication radiofréquence bidirectionnel entre plusieurs modules d'un système**

Verfahren zur bidirektionalen Funkkommunikation zwischen mehreren Modulen eines Systemes

Method for bidirectional radio communication among several modules of a system.

(84) Etats contractants désignés:
**AT BE BG CH CY CZ DE DK EE ES FI FR GB GR HU IE IT LI LU MC NL PL PT RO SE SI SK TR**

(30) Priorité: **17.06.2003 FR 0307275**

(43) Date de publication de la demande:
**19.01.2005 Bulletin 2005/03**

(73) Titulaire: **Euro Protection Surveillance (Société par Actions
Simplifiée)
67100 Strasbourg (FR)**

(72) Inventeurs:
• **Mattera, Eric
06700 St. Laurent du Var (FR)**
• **Capiez, Frantz
06560 Valbonne (FR)**

(74) Mandataire: **Nuss, Laurent et al
Cabinet Nuss
10, rue Jacques Kablé
67080 Strasbourg Cedex (FR)**

(56) Documents cités:
**FR-A- 2 787 905      US-A- 4 550 311
US-A- 5 559 496**

• **MOULY M ET AL: "RADIO RESOURCE MANAGEMENT" 1993, GSM SYSTEM FOR MOBILE COMMUNICATIONS, LASSAY-LES-CHATEAUX, EUROPE MEDIA, FR, PAGE(S) 308-430 , XP000860006 * page 318, alinéa 6.1.2.2 * * page 367, alinéa 6.3.1 * * page 368, alinéa 6.3.1.1 * * page 374, alinéa 6.3.1.3 ***
• **MOULY M ET AL: "THE RADIO INTERFACE" 1993, GSM SYSTEM FOR MOBILE COMMUNICATIONS, LASSAY-LES-CHATEAUX, EUROPE MEDIA, FR, PAGE(S) 186-259 , XP000860004 * page 208, ligne 10 - ligne 17 * * page 214, alinéa 4.2.1.4 * * page 235; tableau 4.4 ***

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

EP 1 499 154 B1

## Description

La présente invention concerne le domaine des communications par voie radiofréquence entre plusieurs entités distinctes et séparées, et a pour objet un procédé de communication radiofréquence bidirectionnel entre plusieurs modules d'un système et un système d'alarme à plusieurs modules mettant en oeuvre ce procédé.

De nombreux protocoles de communication radiofréquence sont connus à ce jour, notamment dans le cadre de la téléphonie cellulaire.

M. Mouly et al: "Radio Resource Management", 1993, GSM System for Mobile Communications, publié à Lassay-les-Châteaux par Europe Media, en particulier les chapitres 4 et 6 aux pages 186-259 et 308-430 respectivement, expose la gestion des ressources radio au sein du système GSM.

On connaît, en particulier, les protocoles de communication dits "synchrones" dans lesquels les différentes entités communiquant entre elles émettent et réceptionnent des signaux dans des créneaux temporels prédéfinis ou affectés dynamiquement.

De tels protocoles synchrones sont particulièrement bien adaptés pour des applications dans lesquelles on souhaite réduire les périodes d'activation en émission et en réception des différentes entités communicantes, en vue de limiter leur consommation en énergie.

Les inconvénients de ces protocoles synchrones résident généralement dans leur complexité, leur rigidité, la nécessité de disposer de composants électroniques de précision et leur réactivité réduite.

En effet, un espacement plus important des périodes d'activation diminue effectivement la consommation, mais au détriment de la réactivité.

Or, dans certains domaines, les deux critères précités, à savoir faible consommation et réactivité, peuvent être tous deux déterminants.

Tel est notamment le cas des systèmes de surveillance, de sécurité ou d'alarme à transmission sans fil, formés de modules séparés et à alimentations autonomes, devant réagir dans un délai le plus faible possible après occurrence et détection d'un incident ou d'un événement.

La présente invention a pour principal but de surmonter les inconvénients précités et de fournir un procédé ou protocole de communication, présentant par rapport à l'état de la technique un certain nombre d'avantages, à savoir par exemple : être relativement peu complexe, être robuste, présenter un certain degré de flexibilité, entraîner une faible consommation compatible avec des modules alimentés de manière autonome, avoir une grande réactivité et/ou pouvant être mis en oeuvre avec des composants électroniques classiques.

A cet effet, l'invention a pour objet un procédé de communication radiofréquence bidirectionnel dans un système comprenant, d'une part, un module central formant passerelle et, d'autre part, au moins un module périphérique, lesdits modules pouvant basculer d'un état actif ou éveillé vers un état désactivé ou endormi à faible consommation d'énergie et vice versa, ce ou chacun de ces module(s) périphérique(s) étant en liaison radio discontinue synchrone ou asynchrone avec la passerelle, et les transmissions sous forme de messages à structures déterminées n'intervenant qu'entre ladite passerelle et le ou les module(s) périphérique(s), ce sur au moins deux canaux radiofréquences dédiés, à savoir au moins un canal de communication dit normal pour le ou les module(s) périphérique(s) synchrone(s) ou asservi(s) et un canal de communication dit d'urgence pour le ou les module(s) périphérique(s) asynchrone(s), dissocié(s) ou non encore synchronisé(s).

Conformément à l'invention, ce procédé est caractérisé en ce que la passerelle assure la gestion du procédé et du fonctionnement du ou des module(s) périphérique(s) et sert de référence en fréquence et en temps pour le système, et en ce que les échanges de messages entre la passerelle et le ou les module(s) périphérique(s) s'effectuent dans le cadre de trames temporelles consécutives et contiguës, découpant le temps de manière continue et similaire sur lesdits au moins deux canaux de transmission, et en ce que chaque trame est subdivisée en cinq fenêtres temporelles successives A, B, C, D, E, ledit procédé consistant essentiellement, sur ledit au moins un canal normal ou sur chaque canal normal, à :

- autoriser l'émission du ou des module(s) périphérique(s) vers la passerelle durant les deux premières fenêtres A et B, à raison d'un message MSG par module périphérique ;
- vérifier, au niveau de la passerelle, pendant la troisième fenêtre C de chaque trame, l'existence d'une possible émission spontanée d'un ou de plusieurs module(s) périphérique(s) pendant l'une au moins des deux premières fenêtres A et B de la trame suivante ;
- autoriser l'émission de la passerelle vers un, plusieurs ou tous les modules(s) périphérique(s) pendant la cinquième fenêtre E ;

l'utilisation de la quatrième fenêtre D étant gérée de manière dynamique et en temps réel par la passerelle.

Les dispositions précitées permettent de limiter la consommation, d'une part, en n'imposant aucune émission ou écoute en réception systématique à chaque trame pour le ou les module(s) périphérique(s) et, d'autre part, en n'imposant aucune émission systématique et en limitant fortement les périodes d'écoute systématiques à chaque trame au niveau de la passerelle.

De plus, le système présente une très bonne réactivité dans le sens [module(s) périphérique(s) vers passerelle(s)] du fait de la vérification systématique à chaque trame de la prévision d'une émission au niveau d'au moins un module périphérique et donc de la mise en écoute en réception appropriée de la passerelle à la trame suivante avec garantie de réception d'un message (sauf en cas de problème de transmission, l'absence de réception de message étant en elle-même une information pour la passerelle et indirectement également pour le module périphérique émetteur, conditionnant leur comportement ultérieur). En outre, le procédé selon l'invention présente une grande robustesse du fait de l'attribution fixe de créneaux temporels d'émission/réception.

Enfin, du fait de la présence d'une fenêtre temporelle (quatrième fenêtre D) non affectée a priori, le système 1 dispose d'une réserve temporelle permettant, par exemple, d'absorber des échanges radio supplémentaires ou un pic de trafic non mentionné, d'où une relative flexibilité du protocole ou procédé selon l'invention.

Avantageusement, le procédé met en oeuvre un seul canal normal ou courant Cx et un canal d'urgence Cu. Mais le canal Cx pourra également être multiple ou réparti sur plusieurs canaux physiques.

Pour sécuriser et fiabiliser de manière optimale les transmissions entre modules, il est avantageusement prévu que chaque message MSG reçu par la passerelle ou chaque module périphérique entraîne l'émission en retour vers le module émetteur d'un message d'accusé de réception ACK, chaque message d'accusé de réception émis par la passerelle étant envoyé immédiatement après réception pendant la fenêtre A, B d'envoi du message MSG dont la réception est à confirmer et chaque message d'accusé de réception ACK émis par le ou les module(s) périphérique(s) étant envoyé pendant l'une des fenêtres A, B de la trame suivant celle comprenant la fenêtre E d'envoi du message MSG dont la réception est à confirmer.

De manière préférentielle, les cinq fenêtres A, B, C, D, E présentent des durées similaires, et la durée d'une trame est inférieure à 1 s, préférentiellement d'environ 625 ms.

Le procédé prend ainsi en considération deux types de messages, à savoir les messages MSG dits normaux contenant des informations ou des données exploitables par le module destinataire (ordres, requêtes, réponses à requêtes, données de programmation initiales, information de signalisation d'événement, ...), et les messages ACK d'accusé de réception.

Afin de répartir les temps de transmission vers la passerelle dans un système comportant plusieurs modules périphériques, et pour éviter d'empêcher un tel module d'émettre pendant une période trop longue, le procédé peut prévoir, en plus de la fourniture de deux fenêtres A et B d'émission dans le sens module → passerelle, que chacune des deux premières fenêtres A et B soit subdivisée en deux parties dont chacune est composée d'une première période temporelle ou sous-fenêtre affectée à l'émission d'un message MSG d'un module périphérique vers la passerelle et d'une seconde période temporelle affectée à l'émission d'un message d'accusé de réception ACK de la passerelle vers le module périphérique ayant émis le message MSG durant la première période temporelle appartenant à cette même partie, et que chaque message MSG émis par un module périphérique comporte, en plus d'un en-tête comprenant un identifiant de message msgId, un ou plusieurs objets ou informations Item correspondant chacun à une partie au moins d'une réponse à la passerelle ou d'un message spontané dudit module périphérique, chaque objet étant repéré par un identifiant itemId, subitemId.

Selon une caractéristique de l'invention permettant de prévoir l'émission prochaine d'au moins un message par au moins un module périphérique, la passerelle réalise pendant la troisième fenêtre C de chaque trame, au moins pendant une durée limitée en début de cette fenêtre C, une mesure du niveau de l'intensité ou de la puissance des signaux radio reçus RSSI, préférentiellement au moins sur le canal d'urgence. Ensuite, ladite passerelle est activée en réception, au moins durant une période limitée en début des deux premières fenêtres A et B de la trame suivante, lorsque ledit niveau RSSI mesuré est supérieur ou égal à une valeur seuil prédéterminée RSSI min, chaque module périphérique souhaitant émettre spontanément durant une trame donnée émettant pendant la troisième fenêtre C de la trame précédente, en particulier au moins pendant une durée limitée en début de cette fenêtre C, un signal radio de puissance suffisante pour que le niveau RSSI mesuré par la passerelle soit supérieur à RSSI min.

Pour éviter des activations trop longues en réception de la passerelle en cas d'une mauvaise indication de prévision d'émission (signaux parasites ou bruit radio de niveau élevé durant les fenêtres temporelles C), il peut être prévu qu'en l'absence de détection d'un signal correspondant à un message MSG ou à un message d'accusé de réception ACK, en début des fenêtres A et B pour la passerelle ou en début de la fenêtre E pour le ou les module(s) périphérique(s), ces modules basculent dans leur état désactivé ou endormi à faible consommation.

Pour optimiser la consommation au niveau du ou des module(s) périphérique(s) lorsque la synchronisation entre la passerelle et ce(s) dernier(s) perdure, il peut en outre être prévu qu'en l'absence de communication en cours avec la passerelle, chaque module périphérique asservi demeure dans son état désactivé ou endormi et ne bascule automatiquement dans son état actif ou éveillé que toutes les N trames pour détecter la présence éventuelle d'un message MSG en provenance de la passerelle et à son intention, ce au moins au début de la cinquième fenêtre E de la trame en cours, ledit module périphérique rebasculant dans son état désactivé ou endormi pour les N-1 trames suivantes en cas d'absence d'un tel message, N étant une valeur entière déterminée supérieure ou égale à 2, préférentiellement compris entre 5 et 10. En outre, lors de l'émission spontanée d'un message MSG de la part d'un module périphérique, ledit message MSG comprend une indication, en terme de nombre de trames, de la durée de l'état actif ou éveillé en cours pour ledit module.

En fonctionnement normal, et en vue de conserver la synchronisation entre la passerelle et le ou les module(s) apte à établir une communication synchrone avec ladite passerelle, le procédé peut en outre consister en ce que toutes les P x N trames la passerelle envoie, durant une cinquième fenêtre E, un message de synchronisation CP_SYNCHRO au, à un ou à tous les module(s) périphérique(s), ce message contenant notamment une information indiquant la prochaine trame pendant laquelle ledit message de synchronisation sera à nouveau envoyé par la passerelle, P étant un entier dont la valeur est fixée par la passerelle.

En fonction de la nature de la liaison en cours avec la passerelle, chaque module périphérique peut se retrouver dans des situations différentes vis à vis de la passerelle en termes de qualité et de propriétés de la communication avec cette dernière.

Pour tendre vers une optimisation constante de cette dernière, le procédé peut consister, pour un module périphérique donné faisant partie du système et destiné à établir une liaison synchrone avec la passerelle, à le faire évoluer, le cas échéant de manière répétée, en vue d'une optimisation de la communication, d'un état dissocié dans lequel seule une communication non synchrone sur le canal d'urgence est possible vers un état synchronisé dans lequel une communication bidirectionnelle discontinue par trames synchronisées sur le canal normal est établie entre le module périphérique et la passerelle, puis dudit état synchronisé vers un état asservi dans lequel le lien de communication synchrone est maintenu par calcul et correction des erreurs de synchronisation survenant entre ledit module périphérique et la passerelle, ledit module périphérique-retournant dans son état dissocié en cas d'absences répétées d'accusés de réception de la part de la passerelle suite à l'envoi répété de messages MSG par ledit module périphérique.

Une synchronisation parfaite ne pouvant être atteinte dans la pratique, du fait notamment de certaines contraintes et limitations physiques et électroniques, en particulier en utilisant des composants électroniques classiques pour les modules, il y a lieu de tenir compte, en les intégrant et/ou en les composant, des décalages induits par les facteurs précités.

Afin de tenir compte des petites dérives temporelles pouvant intervenir entre deux trames consécutives, il peut être prévu que les émissions du ou des module(s) périphérique(s) dans les deux premières fenêtres A et B des trames et les émissions de la passerelle dans la cinquième fenêtre E des trames débutent Jt ms (Jt millisecondes) avant les débuts respectifs effectifs desdites fenêtres A, B et E par l'envoi de préambules non porteurs d'information et de longueur 2 x Jt ms, les émissions de signaux du ou des module(s) périphérique(s) dans la troisième fenêtre C des trames débutant également Jt ms avant le début effectif de ladite fenêtre C et se poursuivant pendant 2 x Jt ms, Jt étant une valeur fixée lors de l'initialisation du système.

Toutefois, compte tenu des périodes de désactivation ou d'endormissement s'étendant sur plusieurs trames pour les modules périphériques asservis, il y a lieu de prévoir un mécanisme de rectification du décalage cumulatif pouvant s'établir entre deux périodes de réveil ou d'activation.

A cet effet, le procédé selon l'invention peut comporter en outre les étapes consistant, pour permettre le calcul et la correction des erreurs de synchronisation, à envoyer des messages de synchronisation CP_SYNCHRO avec une répétition rapprochée, inférieure à P x N trames, à mesurer au niveau du module périphérique (3) concerné, à chaque nouveau message CP_SYNCHRO reçu, une valeur algébrique $\Delta E$ en ms correspondant au recalage nécessaire entre deux trames ayant servi audit module à se recaler, reçues à des instants $T(n-1)$ et $T(n)$ et séparé d'un temps T, à comparer $\Delta E$ à une valeur limite MAX $\Delta E$, à calculer la correction en ms : $Cr1 = int [\Delta E/T(n) - T(n-1)]$, à appliquer chaque seconde ladite correction $Cr1$, à reprendre les opérations précitées jusqu'à ce que $\Delta E < $ MAX $\Delta E$ ou $T(n) - T(n-1) > $ P x N trames.

Par ailleurs, deux problèmes pratiques existant dans le cas de communication entre plusieurs entités sont ceux liés aux possibles collisions au niveau des émissions (dans la présente invention ce problème ne se posera que pour les émissions des modules périphériques vers la passerelle) et aux messages non réceptionnés ou non acquittés par le module destinataire.

Selon une caractéristique de l'invention, le procédé peut consister, dans le cas d'un message envoyé par la passerelle à au moins deux modules périphériques, à attribuer à chaque module périphérique destinataire en vue de la transmission d'un message en retour, par exemple un accusé de réception ACK, un numéro d'ordre, sous la forme de l'attribution d'une sous-fenêtre TSA0, TSA1 ; TSB0, TSB1 dans la trame ou l'une des trames suivante(s), ladite passerelle réémettant ledit message MSG de manière inchangée pendant un nombre de fois prédéterminé en l'absence de réception d'un message d'accusé de réception ACK du ou des module(s) périphérique(s) destinataire(s).

Avantageusement, chaque message MSG envoyé par la passerelle comporte, en plus d'un en-tête comprenant un identifiant de message msgId, un ou plusieurs sous-messages submsg, comprenant chacun un ou plusieurs objet(s) item correspondant chacun à un ordre ou une information, chaque sous-message submsg pouvant être destiné à un ou plusieurs module(s) périphérique(s).

De même, selon une autre caractéristique de l'invention, le procédé peut aussi consister, en cas d'absence de réception d'un message d'accusé de réception ACK suite à un message MSG émis par un module périphérique, à autoriser ledit module périphérique à réémettre ledit message dans des sous-fenêtres TSA0, TSA1 ; TSB0, TSB1 de trames consécutives qui lui sont attribuées selon un tableau d'attribution particulier spécifique transmis au module périphérique concerné par la passerelle dans une phase d'initialisation ou de programmation, par exemple notamment lors de l'intégration du module périphérique concerné dans le système.

Pour permettre à la passerelle d'éliminer les messages redondants risquant de lui parvenir en cas de répétition des émissions par un module périphérique, le procédé peut également consister, à chaque nouvelle émission d'un même message par un module périphérique, à incrémenter l'identifiant du message msgId, à conserver les identifiants ItemId des objets de la ou des version(s) du même message émis antérieurement et à affecter aux nouveaux objets du message un identifiant subItemId correspondant à l'identifiant dudit nouveau message. De manière complémentaire, le procédé consiste, au niveau de la passerelle, à supprimer les objets ou les messages doublons, en exploitant les identifiants msgId, ItemId et subItemId des différents messages reçus successivement.

Les caractéristiques décrites précédemment s'appliquent pratiquement exclusivement aux transmissions sur le canal normal, destiné à la communication de la passerelle avec le ou les module(s) périphérique(s) synchrone(s).

Le canal d'urgence Cu, quant à lui, ne sert qu'aux communications avec le ou les module(s) asynchrone(s) ou avec un module périphérique normalement en communication synchrones, mais ayant perdu sa synchronisation ou non encore synchronisé, ou encore pour un dernier envoi d'un message MSG n'ayant pas été acquitté malgré plusieurs répétitions de son émission sur le canal normal.

Préférentiellement, sur le canal d'urgence, chaque émission spontanée d'un message de la passerelle ou d'un module périphérique perdure pendant une durée correspondant à une trame augmentée de la moitié d'une fenêtre temporelle, le module émetteur demeurant à l'écoute pendant une durée équivalente immédiatement après achèvement de ladite durée d'émission.

Bien entendu, le procédé ou protocole décrit ci-dessus peut être mis en oeuvre dans des systèmes de différents types.

Toutefois, conformément à une variante de réalisation préférentielle de l'invention, le système consistera en un système d'alarme de surveillance, de sécurité ou analogue, installé dans un lieu à surveiller et comprenant une passerelle, reliée à l'extérieur, par exemple par une ligne téléphonique commutée, et au moins un, préférentiellement plusieurs, module(s) périphérique(s) choisi(s) dans le groupe formé par les détecteurs et les capteurs de rupture, d'ouverture, de présence, de mouvement, de proximités et volumétriques, les claviers de commande, les télécommandes, les caméras vidéo et analogues, ladite passerelle et lesdits modules périphériques comportant chacun une alimentation autonome.

L'invention sera à présent décrite plus en détail sur la base d'une réalisation pratique, donnée à titre d'exemple non limitatif, évoquée dans une application liée à un système de sécurité ou d'alarme et expliquée en relation avec les dessins schématiques annexés.

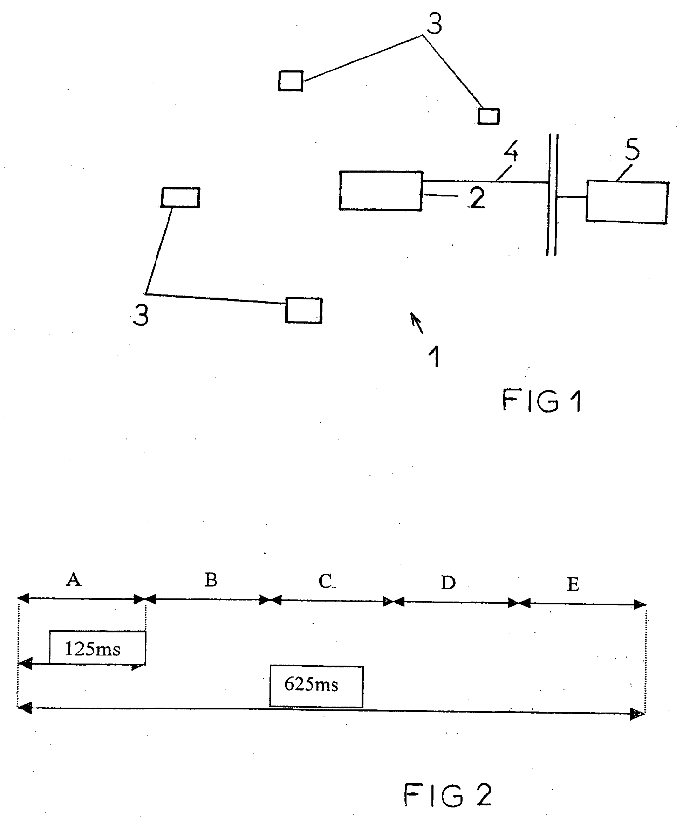

Comme le montre la figure 1, le système 1 comprend un module central 2 formant passerelle et centrale, reliée à une ligne de télécommunication, par exemple du type téléphonique commutée, et au moins un, préférentiellement plusieurs, module(s) périphérique(s) 3 choisi(s) dans le groupe formé par les détecteurs et/ou les capteurs de rupture, d'ouverture, de présence, de mouvement, de proximités et volumétriques, les claviers de commande, les télécommandes, les caméras vidéo et analogues. Avantageusement, ladite passerelle 2 et lesdits modules périphériques 3 comportent chacun une alimentation autonome.

Ce système 1 comporte également des moyens, notamment sous la forme de moyens d'émission/réception radiofréquence et de moyens de traitement numérique du type microprocesseur montés dans la passerelle 2 et dans le ou les module(s) périphérique(s), permettant notamment la mise en oeuvre du procédé décrit précédemment.

Le système 1 comporte préférentiellement plusieurs modules périphériques 3 (module indépendant radio, capteur ou détecteur, donneur d'ordre du type clavier ou télécommande) communiquant avec une et une seule passerelle 2.

La passerelle peut communiquer avec un ou plusieurs module(s) périphérique(s) en même temps. Elle peut aussi envoyer un même message à destination de l'ensemble des modules périphériques 3 (message dit "broadcast" ou à diffusion générale). La passerelle contient un modem pour communiquer sur le lien RTC, par exemple, et un logiciel embarqué permettant de gérer des applications comme de la domotique, de la centrale d'alarme, etc.

Compte tenu de la nature de la communication, on pourra évidemment observer des phénomènes de brouillage.

Le brouillage est considéré comme une perte d'une partie de message ou/et d'acquittement.

Il existe plusieurs sortes de brouillage :

- le brouillage par émission constante (aveugle le récepteur, visible sur le RSSI)
- le brouillage sporadique (il fait perdre une trame de temps en temps). Le fait que le système émette dans des intervalles de temps limités rend plus difficile la perte de trames. Le brouillage peut ne pas influencer le niveau RSSI (trop ponctuel pour la mesure).

Comme indiqué ci-dessus en terme de module(s) périphérique(s) 3, le système 1 comprend au moins un module périphérique synchrone et peut comprendre au moins un module périphérique asynchrone.

Les modules périphériques synchrones ont un lien permanent avec la passerelle (lien radio discontinu à court terme, mais continu sur le long terme). La passerelle peut envoyer un message à un module périphérique synchrone sans que celui-ci ait préalablement émis. A contrario, un module périphérique asynchrone peut être éloigné du système (hors de portée radio), la passerelle ne peut communiquer avec lui que dans le cas où ce périphérique a envoyé un premier message.

Le protocole selon l'invention, présentant les caractéristiques évoquées précédemment et ci-après, offre notamment les possibilités suivantes dans le contexte décrit :

- le protocole radio permet à des modules périphériques de communiquer avec la passerelle et inversement
- prend en compte les deux catégories de modules périphériques (asynchrone, synchrone)
- sécurise la transmission au moyen d'acquittement de messages
- la passerelle peut envoyer un message à tous les modules périphériques à chaque phase de réveil des modules périphériques asservis
- un module périphérique peut envoyer un message en 625 ms maximum à la passerelle
- jusqu'à quatre modules périphériques peuvent émettre des messages dans une même trame
- il est possible d'envoyer un message long (> 128 octets) entre module périphérique et passerelle
- dans le cas d'un brouillage, il est possible de changer de canal radio dit normal
- le système peut fonctionner dans un mode dégradé lui permettant de communiquer même si tous les canaux sont perturbés
- le protocole est conforme à l'occupation de la bande 0,1 % en 868 MHz
- fournit un cryptage de l'information pour éviter le "retour de messages" et l'émission de trames frauduleuses
- assure une gestion de la faible consommation.

Le protocole sera décrit plus avant dans la présente par description successive de ses différentes couches constitutives.

Couche physique

a) La transmission radio

Il existe plusieurs canaux radio possibles (séparés en fréquence). Un système occupe pendant un temps donné un seul canal dit normal, Cx. Si deux systèmes occupent chacun un canal, les deux systèmes n'interagissent pas entre eux du fait de la séparation radio. Les canaux sont numérotés C1, C2, ...Cn. Il est possible qu'un système commute dans le temps, d'un canal à l'autre. Dans la suite Cx représente le canal courant ou normal qu'utilise le système.

Le canal d'urgence est un canal radio particulier, appelé ci-après Cu. Il n'est utilisé que pour les modules périphériques asynchrones (télécommande) ou pour des modules périphériques ayant momentanément perdus leurs synchros ou en phase d'enregistrement.

Le choix de la vitesse de transmission pour les modules périphériques synchronisés est de 19200 Bauds. Cette vitesse a été fixée pour des raisons de débit et de consommation. Le codage radio se fait en NRZ (No Return to Zero - Sans retour à zéro), ce qui permet d'utiliser la bande passante au maximum (contrairement au codage dit Manchester), mais a pour conséquence une mise en oeuvre plus délicate du discriminateur. La liaison est de type : UART, 8 bits, pas de bit de parité.

Il est possible d'émettre sur des fréquences précises tant au niveau de la passerelle que celui des modules périphériques. Par contre, il n'est pas possible de changer finement la fréquence de réception sur tous les modules.

Par définition, la passerelle est l'unique référence au niveau émission et réception. Une des premières actions que doit faire la passerelle, par rapport à un nouveau module périphérique, est de demander une variation de fréquence d'émission afin de la centrer par rapport à la fréquence d'émission et de réception du système. Ce réglage sera produit régulièrement, assurant que tous les modules périphériques émettent à la même fréquence (voir ci-après le message de type CP_ACK).

La passerelle comporte un composant qui gère les deux fréquences (0-1) à l'aide d'un comparateur non adaptatif. Cela à l'avantage de la vitesse, et évite d'envoyer un préambule pour calculer la moyenne du comparateur, mais demande par contre une plus grande précision pour le calage en fréquence entre émetteur-récepteur.

Pour chaque module périphérique, la moyenne est adaptative et le problème se pose moins. Cette moyenne sera remise à jour à intervalle régulier.

Lors de la réception des données, les circuits de réception prennent en compte les transitions 0-1 ou 1-0 afin de caler une horloge interne synchrone à ces données. Il faut un peu de temps pour synchroniser cette horloge, d'où la présence du préambule (0h55). Cela permet de simplifier la réception vue du processeur, qui peut travailler avec une liaison série synchrone.

Toutefois, lorsque les données comportent trop de "0" ou de "1" qui se suivent, l'absence de transitions va amener l'horloge synchrone à se décaler. C'est pourquoi, le protocole interdira l'émission de plus de 2 octets 0h00 ou 0hFF successifs en positionnant l'octet 0h55, afin que l'horloge se resynchronise.

b) Découpage temporel

Le temps est découpé en trames. Le temps d'une trame est de 625 ms. Il peut y avoir émission radio ou non dans une trame. Chaque trame est numérotée dans le temps de 0 à 255 (modulo).

Une trame est constituée de cinq fenêtres temporelles TS, notées de A à E (voir figure 2). Chaque fenêtre joue un rôle particulier dans le dialogue.

Le tableau ci-dessous indique le rôle de chaque fenêtre formant la trame. La suite décrit de façon plus détaillée, le protocole de communication.

| Nom de la fenêtre | Fonction |
|---|---|
| A | Emission à l'initiative du périphérique + ACK passerelle |
| B | Même rôle que A |
| C | Mesure du RSSI - Lecture d'un message du canal d'urgence |
| D | Géré dynamiquement par le protocole (vidéo, clavier) |
| E | Emission à l'initiative de la passerelle |

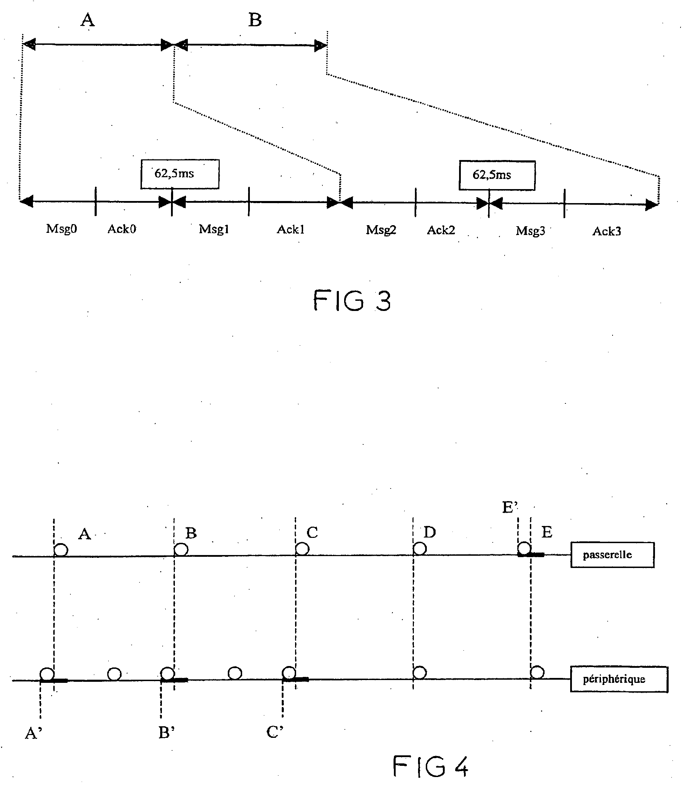

La structure des fenêtres A et B est représentée sur la figure 3 annexée.

La fenêtre C est utilisée pour savoir si un module périphérique va émettre un message. Le RSSI (Received Signal Strength Indicator - Indicateur d'intensité ou de puissance des signaux reçus) de Cx et de Cu est mesuré (chaque mesure peut prendre jusqu'à 1 ms). Si le niveau de RSSI sur Cx est suffisant, la passerelle va considérer qu'au moins un message est présent et va tenter de décoder les messages éventuellement placés dans les fenêtres A et B de la trame suivante émise sur Cx.

La fenêtre C est utilisée pour le canal d'urgence Cu et le canal normal Cx. Si un niveau RSSI suffisant a été détecté, la passerelle va écouter Cu pendant une partie de C et Cx pendant une partie de TSa ou TSb (de la trame suivante) afin de détecter une émission annoncée ou prévisible d'un module périphérique asynchrone et/ou synchrone. De même, c'est dans cette fenêtre C que la passerelle émettra des messages pour le canal d'urgence. Si le RSSI de Cu est trop faible, alors la passerelle n'observera aucune fenêtre.

La mesure de RSSI se fait sur Cu toutes les 625 ms (c'est-à-dire à chaque trame) pour la passerelle. En effet, le RSSI est considéré comme un "ou logique" pour la détection radio provenant de plusieurs modules périphériques.

Si un niveau RSSI mesuré est suffisant pour réveiller la passerelle, mais ne vient pas d'un module périphérique (perturbation extérieure), la passerelle va écouter l'entête de chaque message, avant de pouvoir se mettre en basse consommation.

Un autre problème lié au RSSI résulte de l'éblouissement. Si un module périphérique est trop près de la passerelle, sa puissance d'émission sature le récepteur de celle-ci, qui est alors incapable de détecter correctement la bande d'émission. Il faudra adapter la puissance d'émission pour un tel module périphérique.

La fenêtre D est utilisée pour tous les "extras" imposés par les modules périphériques comme par exemple l'envoi d'un message long, la détection de décalage en fréquence, etc. Son utilisation est régie par les couches supérieures du protocole. Le deuxième intérêt de l'existence d'une telle fenêtre est de pouvoir laisser un peu de temps à la passerelle entre le moment de l'acquisition des messages provenant des fenêtres A et B, et le moment de la réponse sur la fenêtre E.

La passerelle gère l'utilisation de la fenêtre D en temps réel. Aucun module périphérique ne peut émettre spontanément dans cette fenêtre.

La fenêtre E est utilisée par la passerelle pour envoyer des messages (synchronisation, ordres, etc) aux modules périphériques. Cette fenêtre E fonctionne uniquement en émission pour la passerelle. Les modules périphériques sont à l'écoute des fenêtres A, B (ACK de messages) et de E pour la synchronisation et les ordres.

Ainsi, les dispositions précitées définissent les conditions de fonctionnement suivantes :

- la passerelle ne peut émettre un message que dans la fenêtre E
- chaque module périphérique ne peut émettre un message que dans la fenêtre A ou B
- la passerelle acquitte un message en provenance du module périphérique immédiatement après sa réception.
- si un module périphérique veut émettre spontanément un message, il doit d'abord envoyer de l'énergie dans la fenêtre C (fréquence Cu)
- si la passerelle émet un message (pendant TSE), le module périphérique émettra toujours en A ou B de la trame suivante (voir chapitre acquittement).

Comme déjà indiqué précédemment, la basse consommation impose que la passerelle et les modules périphériques soient synchronisés. Ainsi, toutes les émissions d'une des entités peuvent se faire rapidement car l'autre entité est en réception au bon moment. Cela évite l'émission ou la réception pendant un certain temps radio, très consommateur. L'autre aspect est la vitesse avec laquelle sont envoyées les informations. Plus le débit est rapide, plus la consommation baisse (mais la portée radio baisse également). Une passerelle et un module périphérique sont synchronisés lorsque le début de trame commence en même temps pour les deux. C'est la passerelle qui joue l'orchestration et les modules périphériques doivent se synchroniser par rapport à celle-ci.

Dans l'idéal, si les modules périphériques sont parfaitement synchrones avec la passerelle, la liaison peut être considérée comme "filaire". Ceci n'est hélas pas le cas, car il existe un décalage temporel entre un module périphérique et la passerelle dû à plusieurs facteurs. Ces facteurs sont soient systématiques dans l'erreur (c'est le meilleur des cas, car il faut simplement en tenir compte), soit ils varient dans le temps et, dans ce cas, il faut les prendre en compte pour calculer les "jeux temporels" qui doivent être pris en compte sous peine de ne plus pouvoir communiquer.

Les erreurs principales sont :

- décalage entre l'émission et la réception dû au transducteur (+ 200 uS)
- erreur de mesure due à la granularité du temporisateur pour mesurer les temps (0.. + 1 ms)
- erreur d'arrondi sur le calcul (0.. + 1 ms)
- glissement max (rapport de fréquence du quartz 32 K) entre deux resynchronisations.

Toutes ces erreurs sont à prendre en compte pour réveiller en avance l'une ou l'autre partie selon des critères de probabilités. En effet, il est possible de mettre en place des "jeux temporels" sur le module périphérique seul ou sur la passerelle seule. Cependant, la répartition du "jeu" entre les deux entités permet de réduire au maximum la consommation.

Le jeu temporel peut être déterminé comme valant :

$$(Jt) \approx -3 \text{ ms}\mu + 5 \text{ ms} = 8 \text{ ms}$$

Le diagramme de la figure 4 montre l'emplacement des jeux par rapport à une synchronisation parfaite.

Comme le montre cette figure, chaque module périphérique a des trames composées des fenêtres : {A', B', C', D, E}, et la passerelle de : {A, B, C, D, E'}.

1. Sur le (TSC), si le module périphérique doit émettre de l'énergie, il se réveille (Jt) ms avant et émettra pendant (2*Jt) afin d'être sûr que la passerelle détecte l'énergie.
2. Si la passerelle doit émettre sur (TSE), elle va émettre un préambule (Jt) avant le réveil du (TSE) du module périphérique et émettra un préambule de (2xJt) afin d'être sûr que le module périphérique détecte bien le préambule.
3. Si le module périphérique doit émettre en (A0, A1, B0 ou B1), il se réveille (Jt) ms avant et émettra pendant (2*Jt) afin d'être sûr que la passerelle détecte le préambule.

Ainsi, la passerelle ne détecte le RSSI sur le (TSC) que pendant 1 ms (comme elle le fait toutes les trames, le temps de détection doit être le plus court possible). Le module périphérique fait de même sur le (TSE), (et comme il le fait toutes les six trames voire plus souvent, ce temps doit également être minimisé).

La passerelle écoute le niveau radio afin d'en déduire si un ou plusieurs modules périphériques émettent en même temps sur la fenêtre C. La mesure du RSSI est un OU du point de vue radio.

Un problème évident réside dans le fait que plusieurs modules périphériques peuvent vouloir parler en même temps et qu'ils ne peuvent le faire qu'en n'émettant pas en même temps. Jusqu'à quatre modules périphériques peuvent émettre dans une même trame. Pour cela, la découpe temporelle doit être faite, à savoir que chaque module périphérique émettra respectivement dans les sous-fenêtres {TSA0, TSA 1, TSB0, TSB1}.

L'attribution des sous-fenêtres peut être réalisée comme décrit ci-dessous.

Le module périphérique, après avoir émis de l'énergie pour la détection RSSI (vue de la passerelle), va arrêter son émission jusqu'à l'émission du message MSGi (ième message émis). Une table, remplie une fois pour toutes par la passerelle, lui indique le numéro de trame relatif ainsi que le rang du message à chaque tentative d'émission. Si le message émis a besoin d'être acquitté mais ne l'est pas, le module périphérique va répéter son message selon cette table.

Le tableau ci-après représente un exemple de table d'attribution de sous-fenêtres.

La trame relative 0 est la première trame qui suit la trame pendant laquelle le module périphérique a émis un signal radio pendant la fenêtre C.

| Trame rel. | Rang msg | Explication |
|:---:|:---:|---|
| 0 | 0 | Msg0 est utilisé |
| 0 | 2 | Ack0 non reçu, répétition du message dans msg2 |
| 1 | 1 | Ack2 non reçu, émission à la trame suivante dans msg1 |
| 3 | 0 | Ack1 non reçu, émission dans 2 trames dans msg0 |

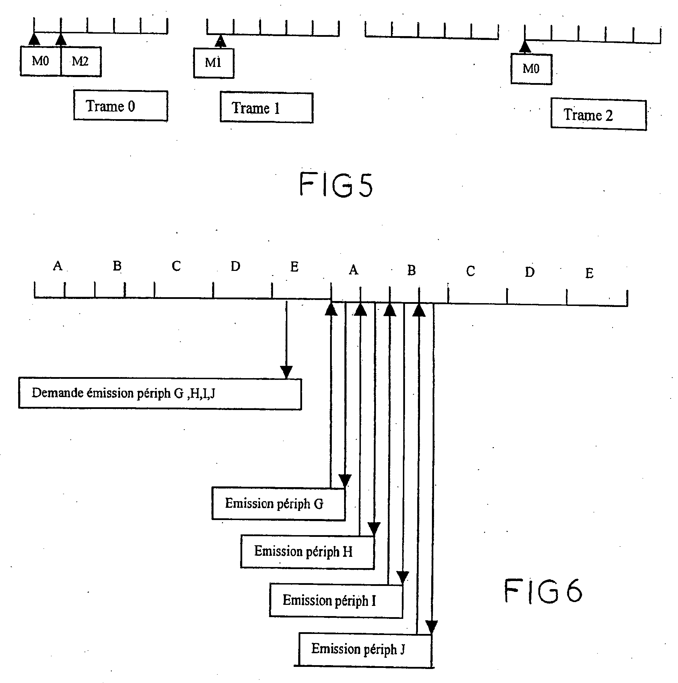

Cette table permet d'éviter au maximum les collisions qui peuvent se produire quand plusieurs modules périphériques veulent parler en même temps. Sa visualisation temporelle est représentée sur la figure 5.

Il y a lieu de distinguer deux cas :

- la passerelle a demandé à plusieurs modules périphériques de renvoyer un message (lors du message de synchronisation). Dans ce cas, le module périphérique s'est vu attribué un numéro de message, ce qui évitera la collision avec les autres modules périphériques

- plusieurs modules périphériques veulent émettre en même temps un message. La table est tout de suite mise en oeuvre.

Les inventeurs ont remarqué que pour deux modules périphériques émettant en même temps, seul un des modules périphériques sera pris en compte (sans brouillage), s'il émet 5 dBm plus fort que l'autre. Dans un système, il est courant de voir des niveaux varier en fonction de la répartition de ceux-ci dans le site d'installation.

La table contient par défaut une séquence, qui peut être modifiée éventuellement par la passerelle.

Un exemple illustrant le premier cas ci-dessus est représenté sur la figure 6 annexée.

Un exemple illustrant une mise en oeuvre de tables dans le second cas ressort des tableaux ci-après. Dans cet exemple, trois modules périphériques veulent parler en même temps. La table pour chacun des modules périphériques est donnée ci-dessous ainsi que les caractéristiques de puissance radio vue de la passerelle.

| Périphérique 1 | | Périphérique 2 | | Périphérique 3 | |
|---|---|---|---|---|---|
| Trame | Rang | Trame | Rang | Trame | Rang |
| 0 | 0 | 0 | 0 | 0 | 0 |
| 0 | 3 | 0 | 3 | 0 | 2 |
| 1 | 1 | 1 | 2 | 1 | 3 |
| 2 | 1 | 2 | 1 | 2 | 3 |
| Puissance -50dBm | | Puissance -50dBm | | Puissance -60dBm | |

Le déroulement des transmissions est illustré dans le tableau ci-dessous.

| Numéro trame | Rang | Périph1 | Periph2 | Périph3 |
|:---:|:---:|:---:|:---:|:---:|
| 0 | 0 | Collision | Collision | Non vu |
| 0 | 1 | | | |
| 0 | 2 | | | Msg émis. OK |

(suite)

| Numéro trame | Rang | Périph1 | Periph2 | Périph3 |
|---|---|---|---|---|
| 0 | 3 | Collision | Collision | |
| 1 | 0 | | | |
| 1 | 1 | Msg émis. OK | | |
| 1 | 2 | | Msg émis. OK | |
| 1 | 3 | | | |

Par rapport à ce qui précède, il y a lieu de noter qu'il existe une exception au fait que la passerelle émette uniquement sur le (TSE) les messages destinés aux modules périphériques. En effet, si cela reste vrai pour les modules périphériques synchronisés (travaillant sur le canal Cx), cela est différent pour une communication avec les modules périphériques travaillant dans la fréquence d'urgence (module périphérique asynchrone ou non synchronisé).

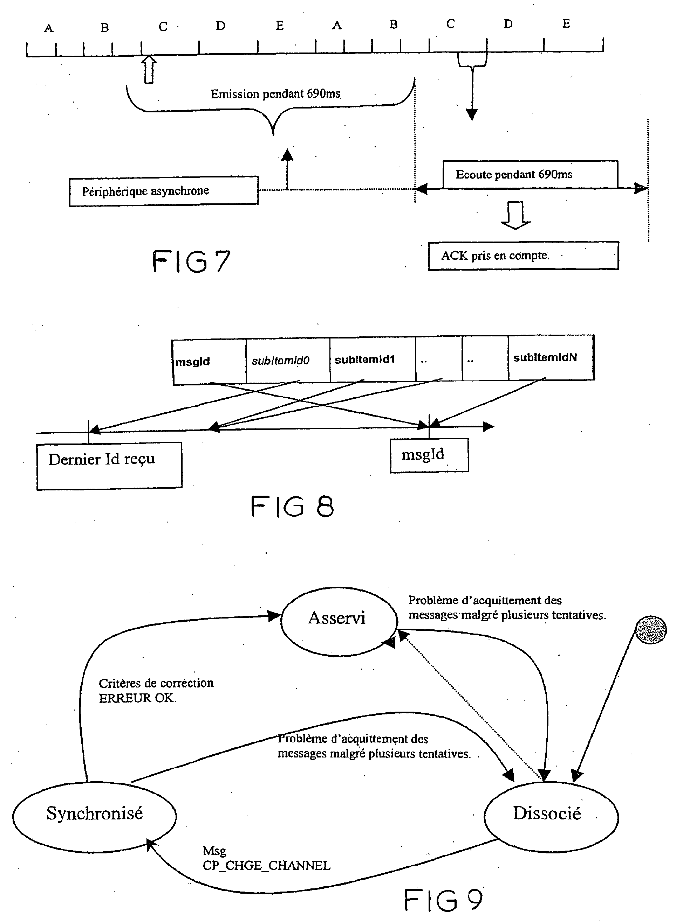

Le graphe de la figure 7 annexée montre un dialogue avec un module périphérique asynchrone. Un module périphérique asynchrone, par définition, n'est jamais synchronisé ce qui veut dire que s'il doit émettre vers la passerelle un message, il doit l'émettre au moins pendant une trame (625 ms), pour être certain que celle-ci ait détecté le RSSI, puis sur une ½ fenêtre, afin que la passerelle décode ce message. La réception sur le module périphérique doit être du même temps pour les mêmes raisons de rendez-vous.

Il est en outre possible que suivant le choix du canal normal, courant ou Cx des noeuds et des ventres radio apparaissent. L'intérêt est qu'un module périphérique dans un trou, verrait lors du changement de canal une meilleure transmission.

Couche du protocole de liaison

Pour la description de cette couche, il y a lieu de prendre en compte les dispositions suivantes :

- la topologie entre la passerelle et les modules périphériques est du type étoile. Il est impossible aux modules périphériques de communiquer entre eux sans passer par la passerelle
- la passerelle émet au plus un message (sans tenir compte des acquittements) toutes les trames (à chaque trame)
- un module périphérique ne peut émettre qu'un message par trame
- la passerelle peut envoyer jusqu'à quatre sous-messages encapsulés dans un message + un sous-message à diffusion générale (dit "broadcast"), ce qui lui permet d'adresser jusqu'à cinq modules périphériques à la fois
- un message destiné à tous les modules périphériques est assimilé à un message pour un module périphérique possédant une adresse particulière.

Chaque message est précédé d'un préambule composé de plusieurs octets 0x55, suivi de trois octets permettant à la passerelle ou au périphérique de savoir où commence l'en-tête du message.

Message module périphérique → passerelle

Le message peut ne contenir que l'en-tête et le total de contrôle.

Un message est composé de 0 à N objets, ci-après dénommés "items", représentant la réponse à des demandes faites par la passerelle ou correspondant à des messages spontanés venant d'un module périphérique.

Le tableau ci-après montre le contenu et la structure générale d'un message

| En-tête du MSG | |
|---|---|
| | Item0 |
| | Item1 |
| | .... |
| Total de contrôle | |

Le tableau ci-après montre la structure et le contenu détaillés d'un sous-message

| En-tête sous message | | |
|---|---|---|
| Taille | Octet | Taille du sous message(y compris la taille, longueur), la valeur $$Taille = 16 + \sum_{i=0}^{nber\_items} Length\_items_i$$ |
| Serial_periph | Octet[5] Type Octet 0 Adr1 Octet 1 Adr2 Octet 2 Adr3 Octet 3 Cons Quartet 4 Chk Quartet 4 | Le premier octet indique la nature du module périphérique { CO, IR, SIRENE,...} Adresse du module périphérique : {Adr1..ADR3} qui forment le numéro de série, « Cons » dépend du fabricant du matériel. 0 Générique 1 Exploitant/Fabricant 2 Réservé Le total de contrôle est calculé selon la formule suivante $$Chk = (1 + Cons + \sum_{0}^{3} Phigh(i) \oplus Plow(i)) \bmod 16$$ |
| Serial_passerelle | Octet[4] Adr1 Octet 1 Adr2 Octet 2 Adr3 Octet 3 | Adresse de la passerelle : {Adr1..ADR3} qui forment le numéro de série. |
| Channel_radio | Octet | Numéro de canal { urgence, normal } radio où message a été émis (Nota : il sert pour concorder ce qu'indique le récepteur radio avec cette valeur) |
| LastRssi | Octet | Dernier niveau reçu par le module périphérique, cela permet éventuellement à la passerelle de connaître la qualité du média (un RSSI faible étant plus risqué) |
| MsgId | Octet | Numéro d'identifiant du sous message. Ce numéro est augmenté de 1 à chaque envoi. |
| Nber sub msg | Octet | Nombre d'items que contient le sous message. |
| Wakeup_ts | Octet | Nombre de trames pendant lesquelles le module périphérique écoutera |
| LastRcveId | Octet | Numéro d'identification du dernier message reçu par le module périphérique |
| 0..M Items | | |

Le tableau ci-après montre la constitution d'un objet ou "item" :

| En-tête Item | | |
|---|---|---|
| Taille | Octet | Taille de l'item (y compris la taille), la valeur mini est 3. |
| Opcode | Octet | Code opération pour le message. |
| requestId | Octet | Numéro de requête, la réponse ou les réponses à cet item redonnera cette valeur, cela permet à la source de connaître la provenance des messages en retour. |
| msgId | Octet | Identifiant pour chaque item, cette valeur est égale au msgId de l'en-tête msg et ne variera plus même lors des répétitions. |

(suite)

| Corps de l'item | | |
|---|---|---|
| Corps | Octet[] | Données complémentaires de taille variable. |

Message passerelle → module périphérique

Le message peut ne contenir que l'en-tête et le total de contrôle (message vide)

Chaque sous message est constitué de 0 à M objets ou "items" et chaque objet représente un ordre.

Un sous message n'est adressé qu'à un seul module périphérique (c.a.d, M objets sont adressés à un module périphérique) ou à tous les modules périphériques (cas d'un message de diffusion générale qui n'est considéré que comme un message pour un module périphérique avec une adresse particulière).

La structure générale et le contenu du message est donné par le tableau suivant :

| Préambule | |
|---|---|
| En-tête du MSG | |
| | Sous Message pour diffusion à tous les modules périphériques |
| | Sous message périph1 |
| | .... |
| Total de contrôle | |

Le tableau suivant donne la structure et le contenu d'un sous-message d'un message de diffusion générale

| En-tête du sous msg | |
|---|---|
| | Item0 |
| | Item1 |
| | .... |
| Total de contrôle | |

Le tableau suivant donne la structure et le contenu d'un objet ou item d'un sous-message de message de diffusion générale

| En-tête Item | | |
|---|---|---|
| Taille | Octet | Taille de l'item (y compris la taille), la valeur mini est 3. |
| Opcode | Octet | Code opération pour le message. |
| requestId | Octet | Numéro de requête, la réponse ou les réponses à cet item redonnera cette valeur, cela permet à la source de connaître la provenance des messages en retour. |
| Corps de l'item | | |
| Body | Octet[] | Données complémentaires de taille variable. |

Le tableau suivant indique la structure et le contenu d'un sous-message à destination d'un module périphérique

| En-tête sous message | | |
|---|---|---|
| Taille | Octet | Taille du sous message(y compris la taille), la valeur $$Taille = 9 + \sum_{i=0}^{nber\_items} Length\_items_i$$ |

(suite)

| En-tête sous message | | |
|---|---|---|
| Serial_periph | Octet[5]<br><br>Type    Octet    0<br>Adr1    Octet    1<br>Adr2    Octet    2<br>Adr3    Octet    3<br>Cons    Quartet    4<br>Chk    Quartet    4 | Adresse du module périphérique : {Adr1..ADR3} qui forme le numéro de série, « Cons » dépend du fabricant du matériel.<br><br>0                Générique<br>1                Fabricant/Exploitant<br>2                Réservé<br><br>Le total de contrôle est calculé selon la formule suivante<br><br>$$Chk = (1 + Cons + \sum_{0}^{3} Phigh(i) \oplus Plow(i)) \bmod 16$$ |
| Position_msg | Octet | Indique dans quel ½ fenêtre, la réponse à ce sous message doit être placée par le module périphérique. |
| MsgId | Octet | Numéro d'identifiant du sous message. Si le module périphérique reçoit deux fois de suite, le même numéro, il acquitte le sous message mais ne tient pas compte des items (répétition) |
| Nber_items | Octet | Nombre d'items que contient le sous message. |
| 0..M Items | | |

La structure et le contenu d'un message à destination d'un module périphérique sont donnés par le tableau ci-dessous.

| En-tête message | | |
|---|---|---|
| Taille | Octet | Taille du message(y compris la taille), la valeur<br><br>$$Taille = 9 + \sum_{i=0}^{nber\_submsg} Length\_submsg_i$$ |
| Passerelle. | Octet[5]<br>Adr0    Octet    0<br>Adr1    Octet    1<br>Adr2    Octet    2<br>Adr3    Octet    3<br>Cons    Quartet    4<br>Chk    Quartet    4 | Adresse de la passerelle source de ce message : ={Adr0..ADR3} qui forment le numéro de série, « Cons » dépend du fabricant du matériel.<br><br>0                Générique<br>1                Fabricant/Exploitant<br>2                Réservé<br><br>Le total de contrôle est calculé selon la formule suivante<br><br>$$Chk = (1 + Cons + \sum_{0}^{3} Phigh(i) \oplus Plow(i)) \bmod 16$$ |
| Nber_submsg | Octet | Donne le nbre de sous messages (0 à 5) constituant le msg. |
| channel | Octet | Numéro de canal { urgence, normal } radio où le message a été émis (Nota : il sert pour concorder ce qu'indique le récepteur radio avec cette valeur) |
| scrambleKeyNb | Octet | Numéro de clef pour le cryptage. Reste à 0 pour message en clair. |
| 0..5 Sous messages. | | |
| CRC (polynome conforme à la norme CCITT 3) | | |

On décrit à présent le déroulement dans le temps d'une communication entre la passerelle et un module périphérique.

Dans la suite, il est évidemment fait référence aux modules périphériques synchronisés ou asservis, les modules périphériques travaillant sur la fréquence d'urgence ont un protocole de type "ping-pong" très simple.

Chaque module périphérique peut envoyer un message suite à un événement extérieur (cas d'une intrusion, par exemple) ou pour répondre à la passerelle suite à une demande de celle-ci.

Le module périphérique se réveille à intervalle régulier afin de recevoir un message de synchronisation (voir synchronisation), ou un ordre de la passerelle. En dehors de ces réveils, le module périphérique n'est pas accessible pour la passerelle. La passerelle doit attendre le prochain réveil pour communiquer avec le module périphérique ou que le module périphérique envoie un message avec attente d'acquittement.

Le module périphérique asservi est éveillé toutes les N trames (programmable par la passerelle) et donc toutes les N *P trames (pour recevoir la synchro). En dehors, de ces cas, il peut être éveillé parce que :

- Il est en mode synchronisé et non asservi (dans ce cas, il est éveillé à chaque trame)
- Il est asservi depuis peu et le module périphérique n'a pas encore adopté son cycle d'endormissement réveil.
- Le module périphérique a émis spontanément un message et reste éveillé pour X trames (programmable par la passerelle.)

Dans tous ces cas, le module périphérique indique dans l'entête, le nombre de trames pendant lesquelles le module périphérique est éveillé avant de s'endormir à nouveau et recommencer son cycle.

Les tableaux ci-dessous montrent ce qui se passe fenêtre par fenêtre suivant les différents cas possibles de communication.

La passerelle émet spontanément un message

| Ts | Passerelle | Périphérique |
|---|---|---|
| A | | |
| B | | |
| C | | |
| D | | |
| E | Emission (msg1 spontané) | |
| A | Acquittement | Réponse dans A (voir position msg) |
| B | | |

Le module périphérique émet spontanément un message

| Ts | Passerelle | Module périphérique |
|---|---|---|
| C | | Emission énergie pour indiquer à la passerelle d'écouter en A et B |
| D | | |
| E | | |
| A | *Ecoute* | |
| B | *Ecoute Acquittement* | Emission msg2 |

La passerelle émet un message en même temps que le module périphérique (cas1)

| Ts | Passerelle | Module Périphérique |
|---|---|---|
| C | | |
| D | | *(déclenchement d'un evt MSG4), le périphérique veut émettre mais le TSc est déjà passé, il faut qu'il attende le prochain TSc* |

(suite)

| Ts | Passerelle | Module Périphérique |
|---|---|---|
| E | Emission (msg3 spontanée) | |
| A | Acquittement | Réponse dans A + envoie MSG4 (le périphérique profite du wagon) |
| B | | |
| C | | (pas d'émission énergie car le message est acquitté) |

La passerelle émet un message en même temps que le module périphérique (cas2)

| Ts | Passerelle | Module Périphérique |
|---|---|---|
| B | | |
| C | | Emission énergie pour indiquer à la passerelle d'écouter en A et B |
| D | | |
| E | Emission (msg4 spontanée) | |
| A | Acquittement | Réponse dans A + envoie MSG4 (le module périphérique profite du wagon) |

La passerelle émet un message à diffusion générale

| Ts | Passerelle | Module Périphérique |
|---|---|---|
| A | | |
| B | | |
| C | | |
| D | | |
| E | Emission Broadcast | |
| A | | |
| B | | |

Les répétitions de messages sont dues à des erreurs du média, il est possible de distinguer plusieurs cas.

1) La passerelle émet un message non compris.
Dans ce cas la passerelle va (suivant les couches supérieures), re-émettre sa trame sans rien lui ajouter.
Le module périphérique retient le dernier numéro de msgId envoyé par la passerelle. Si le nouveau numéro est différent, il est mémorisé et la trame est acquittée après traitement, sinon la trame est simplement acquittée. Il est important de noter que dans cette gestion, tout msg évolutif alors que le msgId reste constant amènerait des pertes de message.
2) Le module périphérique émet un message non compris.
3) Le module périphérique émet un message qui est compris mais non acquitté.

Dans ces deux derniers cas, la gestion du message envoyé par le module périphérique est telle qu'indiquée dans le tableau ci-après :

| msgId (en-tête) | subItemId0 | subItemId1 | .. | .. | subItemIdN |
|---|---|---|---|---|---|

Lors de la construction du message, le module périphérique va affecter à chaque nouvel item (car dans ce sens, le message est évolutif) : subItemId = msgId (header)

Un item plus ancien garde la valeur qui lui avait été initialement affecté et msgId est incrémenté à chaque message, la passerelle mémorisent le dernier item reçu.

En définitive, la passerelle reçoit un message dont les valeurs du Id sont celles indiques sur la figure 8 annexée.

La passerelle interprète les identifiants Ids de la manière suivante :

- Dernier Id Reçu >= itemId0 (Il s'agit d'une répétition, l'item0 n'est pas pris en compte)
- Dernier Id Reçu < itemId1 (Il s'agit d'un item qui a déjà été répété mais pas pris encore en compte par la passerelle),
- Dernier Id Reçu < itemIdN (Il s'agit d'un nouvel item car itemIdN = Current Id).

Ainsi, la passerelle peut supprimer les messages doublons dus aux répétitions.

Il peut arriver que le module périphérique ne soit pas acquitté parce qu'il y a un brouillage général ou parce que la passerelle ne peut plus répondre, dans ce cas, le message est répété plusieurs fois avant que le module périphérique n'émette celui-ci dans la fréquence d'urgence. A ce moment, le module périphérique n'est plus synchronisé.

Un message du module périphérique en réponse à une demande passerelle n'est émis qu'une seule fois (Dans le cas contraire, la passerelle pourrait elle-même faire une répétition et il y aurait croisement entre des vieux et des nouveaux messages.).

Si un message n'a qu'une tentative, le non acquittement ne bascule pas le module périphérique dans la fréquence d'urgence.

Un message spontané du module périphérique peut être répété N fois (dépendant du paramétrage.). A l'issue de ces répétitions, le module périphérique passe en urgence et émet le message une dernière fois.

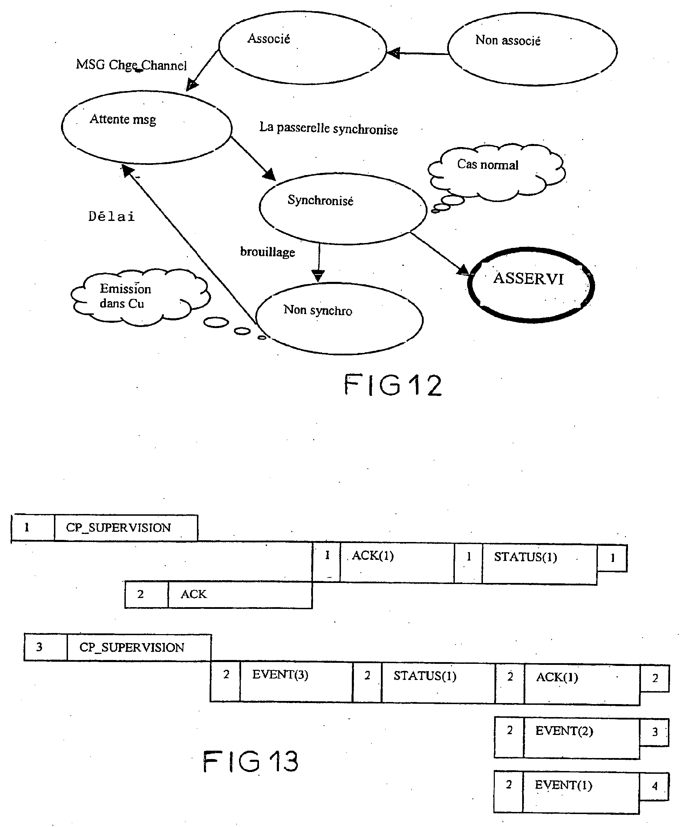

La figure 13 montre, à titre d'exemple, une situation dans laquelle la passerelle émet un message de supervision correctement acquitté (CP_SUPERVISION), alors qu'un message d'événement (EVENT(1), EVENT(2)), émis par un module périphérique n'est pas acquitté.

Le système est formé quand chaque module périphérique connaît la passerelle (par son adresse) et que la passerelle connaît tous les modules périphériques constituant du système. Pour arriver à un tel système, il faut distinguer plusieurs étapes :

- La phase d'enregistrement
  Elle consiste, pour la passerelle, à connaître le numéro de série du module périphérique et à le ranger dans sa fiche.
- La phase d'adoption
  Lorsque la pile est branchée, le module périphérique ne connaît pas la passerelle formant le système, la passerelle envoie un message RECORD_DYNAMIQUE vers le module périphérique si celui-ci doit faire partie du système. Le module périphérique retient en mémoire ce numéro, et ce, jusqu'à la prochaine coupure de sa pile.
- La phase d'association
  Le module périphérique émet à intervalle régulier des messages sur la fréquence d'urgence, la passerelle reconnaissant un module périphérique faisant partie de son système va envoyer un ordre CP_CHANGE_CHANNEL, lui demandant de passer dans le canal Cx normal et d'attendre la suite en restant à l'écoute en permanence.
- La phase synchronisée
  Le module périphérique est synchronisé, il respecte les couches du protocole.

Le tableau ci-après illustre un exemple de dialogue d'enregistrement d'un module périphérique.

| Commentaire | Msg Passerelle | Msg Périphérique |
|---|---|---|
| Mise en place de la pile sur module périphérique | | |
| Emission dans Cu | | PC_I_am HERE |
| Le module périphérique a été enregistré dans la fiche de la passerelle, en retour la passerelle lui demande de retenir son numéro de série | CP_RECORD-> msg0 | |
| La passerelle demande au module périphérique de se synchroniser | CP_CHGE_CHA NNEL->msg0 | |
| La passerelle acquitte le message PC_I_AM_HERE Emission radio dans Cu de msg0 | ->msg0 | |
| | | |
| Le module périphérique attend un première message de synchronisation | | |
| Le module périphérique émet le message de sous synchro vers le module périphérique (et non en broadcast) | CP_SYNCHRO | |

(suite)

| Commentaire | Msg Passerelle | Msg Périphérique |
|---|---|---|
| Le module périphérique émet son premier message sur la fréquence normale et renvoie son état. A partir de maintenant, le module périphérique n'accepte plus de CP_RECORD | | PC_STATUS |
| La passerelle émet à intervalle régulier des messages de synchro et sous synchro | CP_SYNCHRO | |
| ... | | |
| Le module périphérique a levé un drapeau indiquant qu'il est asservi. A partir de maintenant, il est en mode faible consommation. | | PC_STATUS |

A titre d'exemples, on décrit ci-après la structure, le contenu et l'utilité de plusieurs messages types utilisés dans le cadre du protocole de communication radio, les contenus et la structure étant indiqués par les tableaux respectifs, de même que les messages en retour attendus.

Message CP-PING :

| OPCODE | CP_PING | |
|---|---|---|
| OPCODE REPONSE | PC_ACK | |
| Paramètres | TYPE | Explication |
| | | |
| | | |
| | | |
| | | |

Ce message n'a aucun rôle sauf de recevoir un ack, et est utilisé pour dépanner ou pour réaliser un diagnostic.

Message CP-SYNCHRO :

| OPCODE | CP_SYNCHRO | |
|---|---|---|
| OPCODE REPONSE | Rien (si broadcast) | |
| Paramètres | TYPE | Explication |
| next_synchro | Octet | Nombre de trames avant la prochaine synchro |
| | | |
| | | |

Ce message est important car il permet, quand il est envoyé sous forme de diffusion générale, de re-synchroniser à intervalle régulier (next_synchro), tous les modulespériphériques.
Si next_synchro = 0, alors il ne s'agit plus d'un message de synchronisation mais d'un message balise, message permettant à un module périphérique de rester synchronisé en attendant qu'il soit asservi.
Ce message peut également être envoyé à un module périphérique en particulier, afin de synchroniser un module périphérique qui venait d'être associé (voir message CP_CHANGE_CHANNEL)

Message CP_RESET:

| OPCODE | CP_RESET | |
|---|---|---|
| OPCODE REPONSE | | |
| Paramètres | TYPE | Explication |
| | | |
| | | |
| | | |
| | | |

Par ce message, la passerelle demande à un ou tous les modules périphériques de se remettre à 0, le périphérique revient dans ce cas, dans le même état que lorsque la pile est enlevée et remise. Toutes les variables sont reinitialisées.

Message CP ACK :

| OPCODE | CP_ACK | |
|---|---|---|
| OPCODE REPONSE | | |
| Paramètres | TYPE | Explication |
| msgId trimFreq trimLevel | octet | Même valeur que le msgId du message qui doit être acquitté |
| | signed char | Valeur signée pour changer la fréquence |
| | signed char | Valeur signée pour changer le niveau d'émission des périphériques |
| | | |

Lorsque la passerelle reçoit un message du module périphérique, elle mesure les paramètres radio tels que la puissance reçue du module périphérique, l'écart de fréquence entre la valeur de la passerelle et l'émetteur du module périphérique.
Lors de l'acquittement par la passerelle, celle-ci va indiquer au module périphérique, outre l'acquittement du message indiquant qu'il ne faut pas répéter, ce qu'il doit changer dans sa puissance et sa fréquence.

Message CP SUPERVISION:

| OPCODE | CP_SUPERVISION | |
|---|---|---|
| OPCODE REPONSE | PC_ACK | |
| Paramètres | TYPE | Explication |
| ScrambleKeyNb KeyValue | octet | Rangement de la clef qui suit (numéro) |
| | word | Clef de cryptage qui sera utilisée |
| | | |
| | | |

La passerelle va envoyer à chaque module périphérique ce message afin d'obtenir un acquittement et ainsi de savoir de manière active, que tout ce passe bien.

Massage CP CHANGE CHANNEL :

| OPCODE | CP_CHANGE_CHANNEL | |
|---|---|---|
| OPCODE REPONSE | PC_ACK | |
| Paramètres | TYPE | Explication |
| newChannel coefPll wakeupTs powerRadio | e_channel_radio | Nouveau canal, peut être le même que l'ancien |
| | t_coef_pll | Nouveaux paramètres utilisés pour changer la fréquence du transceiver sans passer par une table. |
| | octet | Demande au module périphérique de rester éveillé plusieurs trames après ce message |
| | octet | Possibilité de changer la puissance radio émise par le module périphérique. |

Il y a deux utilisations possibles, pour ce message. Soit le canal est le même, cela permet simplement de changer la puissance radio ou de passer du mode dissocié en attendant le mode synchronisé, soit il y a eu brouillage, et tous les modules périphériques doivent passer sur une autre bande (message à diffusion généralisée).

Comme indiqué précédemment un module périphérique peut être dans un des états suivants :

- Dissocié : Le seul moyen de communication est la fréquence d'urgence, le lien bidirectionnel est conservé mais la passerelle ne peut pas en envoyer de message spontanément au module périphérique.
- Synchronisé : Le module périphérique et la passerelle ont des trames synchronisées, il est possible de communiquer dans les deux sens, cependant le lien reste fragile et la passerelle doit émettre régulièrement vers les modules périphériques pour éviter qu'ils repartent dans l'état dissocié.
- Asservi : Le module périphérique est synchronisé et a calculé des corrections d'erreur lui permettant de rester synchronisé même s'il ne reçoit pas de signal pendant plus de 2 minutes de la passerelle.

La figure 9 représente sous forme de graphe les passages possibles d'un état à un autre.

Un module périphérique connaît l'adresse de la passerelle, lorsqu'un message est destiné au module périphérique ou s'il s'agit d'un message de diffusion générale, la passerelle va utiliser le message (ou non suivant les états) pour se recaler. Il peut s'agir également d'un message à diffusion générale (CP_MSG_SYNCHRO). Le module périphérique une fois asservi, va prendre ces messages pour ce recaler, il peut éventuellement en sauter (problème de transmission) certains, mais si cela perdure, il repartira dans l'état dissocié.

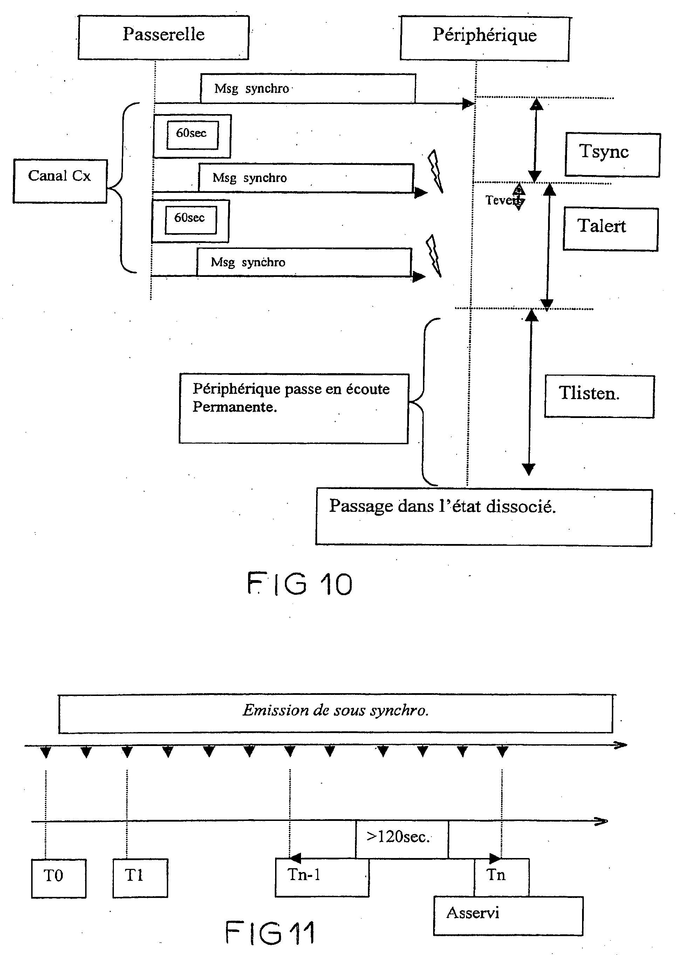

Le graphe de la figure 10 montre ce qui se passe en cas d'échec de la transmission sur plusieurs synchros.

Un problème particulier est posé par les modules périphériques fraîchement synchronisés en ce qui concerne leur synchronisation à long terme, notamment en cas de basculement dans l'état branché.

En effet, la passerelle émet toutes les 60 secondes, une trame de synchro destinée à tout le parc de périphériques. Lorsqu'un nouveau module périphérique passe de l'état dissocié à celui de synchronisé, son horloge ne bat pas exactement à la même cadence que celle de la passerelle. Ce glissement est d'autant plus important que la différence entre ces deux horloges est grande. Un «jeu temporel (Jt)» a été mis en place afin de couvrir des erreurs minimes, mais cette couverture ne permet pas en l'état de tenir 120 secondes (il doit être permis de perdre un message de synchronisation sans se dissocier) avec un glissement inférieur à Jt.

Le mécanisme prévu consiste pour la passerelle, de générer des messages à diffusion générale à intervalle de temps beaucoup plus court (12 secondes) permettant au module périphérique de se recaler sans que le décalage ait pris une valeur telle qu'il est impossible d'écouter un message. La passerelle émettra, tant que au moins un module périphérique est dans l'état synchronisé, un message à diffusion générale toutes les 12 secondes. Dans le même temps, le module périphérique mesure lors du recalage, l'écart entre la position théorique et celle ou il est actuellement. Il calcule cette erreur et l'intègre dans son timer de façon à ce que le recalage tende vers 0. Lorsque le décalage sur 2 minutes est inférieur à une valeur théorique (voir Jt), le module périphérique est considéré comme asservi.

L'algorithme de calcul mis en oeuvre par le mécanisme précité est le suivant :

Soit $\Delta E$, la valeur algébrique en ms du recalage nécessaire entre 2 trames ayant servi à se recaler et séparée du temps T.

Le module périphérique reçoit un premier message en T0=0 (celui lui permettant de passer de l'état dissocié à l'état synchronisé). A chaque nouveau message, il mesure $\Delta E$. Si $\Delta E$ dépasse la limite MAX $\Delta E$, il retient le temps T1 (correspondant à la réception du dernier message ayant permis de calculer $\Delta E$. Le programme effectue alors une correction prenant en compte cette erreur :

$$Correction = \frac{\Delta E}{(T1-T0)} \approx \text{int}(Correction) = Cr1$$

C'est la correction à faire en ms toutes les secondes. Du fait des erreurs d'arrondi et de mesure, cette correction n'est qu'approximative. T1 est pris comme origine des temps et l'algorithme redémarre avec une mesure de $\Delta E$, et ce, jusqu'à trouver T2.

T2-T1> T1-T0 car la correction Cr1 est en place. La correction Cr1 est une correction du 2$^{\text{ème}}$ ordre qu'il faut intégrer dans le nouveau calcul de correction.

L'algorithme s'arrête lorsque la condition suivante est vérifiée

$$T(n) - T(n-1) > 120 \sec.$$

Arrivé à ce stade, il est important de ne pas continuer l'algorithme car il pourrait y avoir une divergence suite aux erreurs d'arrondi.

Dès ce moment, le module périphérique averti la passerelle qu'il est asservi, la passerelle arrête alors l'émission des messages de synchronisation rapprochés (ou sous synchro) qui sont consommateurs en courant si plus aucun périphérique n'est synchronisé et reste avec une émission de messages de synchronisation toutes les 60 secondes.

Le mécanisme décrit ci-dessus permet de réduire fortement la consommation en :

1) Diminuant les «jeux temporels » qui ne dépendent plus des composants mais simplement de la précision des calculs (Temps d'écoute et d'émission diminués)
2) Augmentant la période entre 2 messages de synchronisation.
3) Etant beaucoup plus tolérant aux erreurs de transmission (perte momentanée de synchronisation).

La figure 11 montre sous la forme d'un graphe chronologique le déroulement dans le temps du mécanisme précité et la figure 12 illustre sous la forme d'un schéma fonctionnel les différents états possibles d'un module périphérique du type synchrone.

La présente invention concerne également comme indiqué précédemment un système d'alarme 1 comprenant, d'une part, un module principal ou central 2 formant passerelle et centrale de gestion locale et, d'autre part, au moins un, préférentiellement plusieurs, module(s) périphérique(s) 3, du type mentionné ci-dessus. Le module principal 3 est relié à une ligne de communication extérieure, par exemple téléphonique 4, lui permettant d'établir une communication avec un système informatique 5 de réception et, le cas échéant, de prétraitement des alarmes, assurant éventuellement également la gestion et la surveillance de l'état du système 1.

Ces modules 2 et 3 sont équipés de moyens d'émission/réception radiofréquence et de moyens de traitement numérique, connus en soi et permettant d'établir entre eux une communication bidirectionnelle, préférentiellement, mais non nécessairement du type décrit ci-dessus.

Ce système 1 peut présenter, de manière additionnelle, les caractéristiques exposées ci-après, et mettre en oeuvre les étapes de procédé décrites ci-dessous, avantageusement mais non nécessairement en relation avec le procédé ou protocole de communication présenté avant.

Conformément à une première caractéristique du système selon l'invention, ce dernier comprend au moins un détecteur infrarouge 3 dont le nombre de faisceaux à couper avant déclenchement et la sensibilité sont réglables par voie logicielle, la passerelle 2 transmettant audit capteur 3 des valeurs de réglage pour les deux paramètres précités, au moins lors de sa phase d'intégration dans le système 1.

Concernant ces dispositions, il convient de noter que pour les détecteurs infrarouge, deux paramètres influant sur la capacité de détection peuvent être paramétrables : il s'agit du nombre de faisceaux à couper avant de provoquer un déclenchement et de la sensibilité du capteur (réglage de gain). Sur les détecteurs actuels, ces paramétrages, s'ils existent, se font pas mise en place de cavaliers, c'est-à-dire de façon matérielle. Le système selon l'invention permet, de par ses possibilités de communication bidirectionnelles, de télécharger ces paramètres depuis la centrale vers des détecteurs conçus programmables. Ce téléparamétrage étant logiciel, il est donc aisément modifiable et peut être modifié dynamiquement en fonction de l'environnement dans lequel est placé le détecteur concerné.

Selon une autre caractéristique de l'invention, le système 1 peut comprendre au moins un détecteur infrarouge 3 présentant un temps de latence bloquant ledit détecteur pendant une durée déterminée après une première détection ou un premier déclenchement, le procédé de mise en oeuvre pouvant consister à adresser audit détecteur infrarouge 3 un message de programmation de suppression dudit temps de latence pendant les états activés ou éveillés du système 1 et des messages d'inhibition dudit capteur pendant les phases désactivées ou endormies du système 1 (mise hors service).

En effet, le principe de fonctionnement d'une détection infra rouge sur des détecteurs radio autoalimentés est basé sur un temps de latence entre deux détections. Ce temps de latence bloque le capteur (soit au niveau de la détection, soit au niveau de la transmission) pendant un temps qui peut se calculer de deux façons différentes :

- soit le capteur est inhibé à partir de la première détection, et ce jusqu'à ce qu'il y ait eu 90 secondes sans détection (dans ce cas ce sont les transmissions radio consommatrices d'énergie qui sont supprimées)
- soit le capteur est inhibé pendant 90 secondes à partir du premier déclenchement (dans ce cas, c'est la détection, et par conséquent aussi la transmission, qui est inhibée).

Cette inhibition a pour conséquence de ne pas avoir d'information détaillée sur ce qui se passe effectivement au niveau du capteur et il n'est pas possible de faire une différence entre détection due à un intempestif et une détection multiple due à un intrus qui se déplace.

L'amélioration apportée par l'invention est la suppression de ce temps de latence et par conséquent la transmission de tous les déclenchements. Ceci est rendu possible par le fait que les modules périphériques 3 sont bidirectionnels et que la centrale 2 peut inhiber les capteurs pendant les états de mise à l'arrêt ou mise hors service du système 1. Ainsi, les capteurs infrarouge n'étant actifs que pendant la marche du système, ils ne généreront pas de surconsommation inutile. En principe, pendant la marche du système, il n'y a pas de déplacement devant le capteur et toutes les détections seront donc utiles pour l'analyse.

La conséquence pour l'exploitant de télésécurité sera donc de pouvoir connaître dans le détail les différentes détections qui ont eu lieu, de façon à pouvoir diagnostiquer avec plus de précision l'origine du déclenchement selon qu'il est unique ou multiple.

Conformément à une autre caractéristique de l'invention, avantageusement en relation avec le procédé de communication décrit précédemment, il peut être prévu, dans certaines conditions spécifiques de mise en oeuvre du système 1, d'adresser à tous les modules périphériques 3 un message de désactivation ou de mise en veille forcée, assorti d'une inhibition totale de fonctionnement, ce pour une durée prédéterminée communiquée avec le message ou jusqu'à réception d'un message de réactivation et de désinhibition.

En effet, le fait que les modules périphériques soient complètement bidirectionnels permet de les piloter à partir de la centrale pour toutes les caractéristiques de leur fonctionnement. Il est par conséquent possible de commander tous les modules périphériques dans un mode tel qu'ils ne transmettent plus aucune trame radio et qu'il n'y ait plus aucune DEL ou autre voyant qui s'allume. Ce mode de fonctionnement permet donc de se conformer à certains rites religieux (rite Israélite pour la célébration du Sabbat par exemple).

Selon une autre caractéristique additionnelle de l'invention, la passerelle 2 peut comprendre des moyens permettant de détecter le décrochement d'un combiné téléphonique qui lui est raccordé et situé sur le lieu d'installation dudit système 1 et de commuter la liaison téléphonique établie, suite au déclenchement d'une alarme, entre la passerelle 2 et un système 5 informatique de réception et de prétraitement des alarmes distant vers ledit combiné, en transformant la liaison porteuse de données numérique en une liaison porteuse de signaux vocaux.

A ce sujet, il convient de noter que pour une centrale d'alarme traditionnelle, le principe est que, en cas de déclenchement d'alarme, la centrale prenne la ligne téléphonique, transmette ses informations et en fonction des protocoles utilisés transmette des informations complémentaires ou encore utilise les micros et haut parleurs raccordés à la centrale pour établir un dialogue vocal avec le site (interphonie). L'amélioration selon l'invention consiste en ce que, après transmission des informations, tout en restant en ligne, la centrale est capable de détecter un décroché du poste téléphonique placé en aval (poste téléphonique présent sur le site). Elle transmet cette information de décroché aux systèmes de réception du télésurveilleur et, ensuite, le télésurveilleur commute la ligne qui était dans un mode numérique vers opérateur sur une ligne vocale classique. De son côté, la centrale connecte la liaison téléphonique encore ouverte vers le poste téléphonique raccordé en aval et ayant été décroché. On établira ainsi, à partir d'une liaison numérique initiale entre une centrale d'alarme 2 et un système informatique de réception, une liaison vocale entre un opérateur côté télésurveilleur et une personne physique via le téléphone côté centrale d'alarme.

Conformément à une autre caractéristique de l'invention, chaque module périphérique 3 comporte avantageusement une mémoire d'enregistrement chronologique d'au moins certains évènements, préférentiellement de tous les évènements,survenus au niveau du module concerné, le contenu de cette mémoire pouvant être transféré vers la passerelle 2 sur requête de cette dernière.

Au niveau des centrales d'alarmes, la présence d'un historique mémorisant les évènements survenus est de plus en plus standardisé dans les systèmes actuels. L'amélioration de l'invention consiste en la création d'un mini journal des évènements au niveau de chaque élément périphérique. Ce journal permet, en cas de destruction de la centrale (ce qui est une éventualité possible en cas d'effraction) de connaître malgré tout les évènements survenus au niveau de chaque module périphérique (détection, perte de liaison avec la centrale, etc.).

Selon une autre caractéristique de l'invention, le système 1 peut comprendre au moins un module périphérique asynchrone 3 sous la forme d'un clavier de commande, ce dernier étant équipé d'une interface de transmission infrarouge du type connu sous la désignation IRDA, permettant d'établir une liaison avec un dispositif informatique portable personnel équipé d'une interface analogue, en vue de la commande, de la programmation et du paramétrage du système 1.

Les organisateurs personnels de type PDA, Pocket PC ou Palm (noms déposés) sont de plus en plus diffusés et de plus en plus de personnes les utilisent. Les claviers de systèmes d'alarme sont très rudimentaires, permettent de faire des mises à l'arrêt ou des mises en marche, mais sont dépassés ou mal appropriés dès qu'il y a lieu de faire un paramétrage plus complexe (modification de codes d'accès par exemple). L'invention prévoit de mettre sur le clavier du système d'alarme une interface IRDA (connexion infra rouge répondant à une norme), les PDA sont en grande majorité équipés de cette même interface. En ajoutant un logiciel spécifique sur le PDA, on peut mettre en place une interface de programmation utilisateur performante et ergonomique en lieu et place de celle compliquée réalisée avec le clavier. Il sera possible de modifier tous les paramètres utilisateurs de façon simple, sans combinaison de touches toujours très difficiles à retenir et sources fréquentes d'erreurs.

Conformément à une autre caractéristique de l'invention, le système 1 peut également comprendre au moins un module périphérique 3 sous la forme d'un détecteur infrarouge, dont le fonctionnement est inhibé pendant les phases d'arrêt ou de désactivation du système 1, ladite inhibition n'étant effective qu'après occurrence d'une première détection suivant le message comprenant l'ordre d'inhibition émis par la passerelle 2, un état de panne ou de dysfonctionnement dudit détecteur étant constaté en cas d'écoulement d'un délai déterminé sans occurrence d'une telle première détection signalée à la passerelle 2.

A ce sujet, il convient de remarquer que, dans l'état actuel des technologies radio et de détection infrarouge, le seul élément qu'il soit impossible de tester de façon automatique est la cellule de détection. Cette fonction est réalisable avec du matériel alimenté filaire, mais pas avec du matériel auto alimenté radio, les consommations électriques étant incompatibles.

La solution proposée par l'invention est une conséquence du fonctionnement bidirectionnel des capteurs. Comme ils ne sont actifs que pendant la phase de marche de la centrale, ils sont inhibés lors de la mise à l'arrêt (système hors services). En fait, ils ne sont pas inhibés immédiatement lors de la mise à l'arrêt, mais après la première détection qui suit la mise à l'arrêt ou l'ordre d'inhibition. Ceci entraînera une détection et donc une transmission, car le système étant à l'arrêt, on peut supposer qu'il y a du déplacement dans le local. S'il s'avérait qu'après un certain temps, il n'y a toujours pas eu de détection sur un des éléments du système, on peut supposer que ce détecteur est en panne de détection. Il y aura alors lieu de demander à l'utilisateur de se déplacer devant ce détecteur pour certifier le fait qu'il soit en panne de détection.

Selon une autre caractéristique de l'invention, il peut être prévu qu'au moins un module périphérique 3 sous la forme d'un détecteur de présence situé dans une pièce comportant un poste de télévision est apte à être commandé et à échanger des messages avec un boîtier d'audiomètre, préférentiellement par voie radiofréquence.

Dans le cas d'un foyer ou d'une famille test, pendant que le poste de télévision est allumé et que le principe de l'Audimat (nom déposé) fonctionne (comptage de quelle chaîne et combien de temps), il est possible de contrôler en temps réel la présence d'un téléspectateur devant la télévision. En effet, une présence humaine, devant un détecteur qui détecte en permanence (sans avoir de temps de latence) provoquera obligatoirement des déclenchements. Ces déclenchements seront transmis vers le boîtier d'audimètre qui aura ainsi une information sur la présence effective d'un téléspectateur devant la télévision allumée. Le détecteur sera quant à lui réveillé sur demande du boîtier d'audimètre toujours afin d'économiser au maximum les piles ou batteries dudit détecteur.

Enfin, conformément à une caractéristique éventuelle de gestion des alarmes, il peut être prévu que la centrale d'alarme 2 transmette chaque alarme après son occurrence, mais que le système de réception 5 avant de transmettre l'alarme pour traitement effectif, demande un certain nombre d'informations complémentaires à la centrale d'alarme ou attende un évènement déterminé pendant un intervalle de temps donné avant de transmettre l'information pour traitement. Dans ce cas, l'information aura été complété et enrichie, de façon à permettre une décision plus perspicace qui tienne compte de tous les paramètres connus.

Bien entendu, l'invention n'est pas limitée au mode de réalisation décrit et représenté aux dessins annexés. Des modifications restent possibles, notamment du point de vue de la constitution des divers éléments ou par substitution d'équivalents techniques, sans sortir pour autant du domaine de protection de l'invention.

**Revendications**

1. Procédé de communication radiofréquence bidirectionnel dans un système d'alarme, de surveillance ou de sécurité, installé dans un lieu à surveiller et comprenant, d'une part, un module central formant passerelle et, d'autre part, au moins un module périphérique, lesdits modules comportant chacun une alimentation autonome, pouvant basculer d'un état actif ou éveillé vers un état désactivé ou endormi à faible consommation d'énergie et vice versa, ce ou chacun de ces module(s) périphérique(s) étant en liaison radio discontinue synchrone ou asynchrone avec la passerelle, et les transmissions sous forme de messages à structures déterminées n'intervenant qu'entre ladite passerelle et le ou les module(s) périphérique(s), ce sur au moins deux canaux radiofréquences dédiés, à savoir au moins un canal de communication dit normal pour le ou les module(s) périphérique(s) synchrone(s) ou asservi(s) et un canal de communication dit d'urgence pour le ou les module(s) périphérique(s) asynchrone(s), dissocié(s) ou non encore synchronisé(s), la passerelle assurant la gestion du procédé et du fonctionnement du ou des module(s) périphérique(s) et servant de référence en fréquence et en temps pour le système, les échanges de messages entre la passerelle et le ou les module(s) périphérique(s) s'effectuant dans le cadre de trames temporelles consécutives et contiguës, découpant le temps de manière continue et similaire sur lesdits au moins deux canaux de transmission, procédé **caractérisé en ce que** chaque trame est d'une durée inférieure à 1s et est subdivisée en cinq fenêtres temporelles (TS) successives (A, B, C, D, E) présentant des durées similaires; **en ce qu'**il consiste, sur ledit au moins un canal normal, à :

autoriser l'émission du ou des module(s) périphérique(s) vers la passerelle durant les deux premières fenêtres (A et B), à raison d'un message (MSG) par module périphérique ;
vérifier, au niveau de la passerelle, pendant la troisième fenêtre (C) de chaque trame, l'existence d'une possible émission spontanée d'un ou de plusieurs module(s) périphérique(s) pendant l'une au moins des deux premières fenêtres (A et B) de la trame suivante ;
autoriser l'émission de la passerelle vers un, plusieurs ou tous les périphérique(s) pendant la cinquième fenêtre (E) ;
**en ce que** l'utilisation de la quatrième fenêtre (D) est gérée de manière dynamique et en temps réel par la passerelle,
chaque message (MSG) reçu par la passerelle ou chaque module périphérique entraîne l'émission en retour vers le module émetteur d'un message d'accusé de réception (ACK),
**en ce que** la passerelle réalise pendant la troisième fenêtre (C) de chaque trame, au moins pendant une durée limitée en début de cette fenêtre (C), une mesure du niveau de l'intensité ou de la puissance des signaux radio reçus, RSSI, au moins sur le canal d'urgence, et **en ce que** ladite passerelle est activée en réception, au moins durant une période limitée en début des deux premières fenêtres (A et B) de la trame suivante,
lorsque ledit niveau, RSSI, mesuré est supérieur ou égal à une valeur seuil prédéterminée, RSSI min, chaque module périphérique souhaitant émettre spontanément durant une trame donnée émettant pendant la troisième fenêtre (C) de la trame précédente, en particulier au moins pendant une durée limitée en début de cette fenêtre (C), un signal radio de puissance suffisante pour que le niveau RSSI mesuré par la passerelle soit supérieur à RSSI min.

2. Procédé selon la revendication 1, **caractérisé en ce que** la durée d'une trame est d'environ 625 ms, chaque message d'accusé de réception émis par la passerelle étant envoyé immédiatement après réception pendant la fenêtre (A, B) d'envoi du message (MSG) dont la réception est à confirmer et chaque message d'accusé de réception (ACK) émis par le ou les module(s) périphérique(s) étant envoyé pendant l'une des fenêtres (A, B) de la trame suivant celle comprenant la fenêtre (E) d'envoi du message (MSG) dont la réception est à confirmer.

3. Procédé selon la revendication 2, **caractérisé en ce que** chacune des deux premières fenêtres (A et B) est subdivisée en deux parties dont chacune est composée d'une première période temporelle ou sous-fenêtre affectée à l'émission d'un message (MSG) d'un module périphérique vers la passerelle et d'une seconde période temporelle affectée à l'émission d'un message d'accusé de réception (ACK) de la passerelle vers le module périphérique ayant émis le message (MSG) durant la première période temporelle appartenant à cette même partie et **en ce que** chaque message (MSG) émis par un module périphérique comporte, en plus d'un en-tête comprenant un identifiant de message (msgId), un ou plusieurs objets ou informations (Item) correspondant chacun à une partie au moins d'une réponse à la passerelle ou d'un message spontané dudit module périphérique, chaque objet étant repéré par un identifiant (itemId, subitemId).

4. Procédé selon la revendication 3, **caractérisé en ce qu'**en l'absence de détection d'un signal correspondant à un message (MSG) ou à un message d'accusé de réception (ACK), en début des fenêtres (A et B) pour la passerelle ou en début de la fenêtre (E) pour le ou les module(s) périphérique(s), ces modules basculent dans leur état désactivé ou endormi à faible consommation.

**5.** Procédé selon l'une quelconque des revendications 1 à 4, **caractérisé en ce qu'**en l'absence de communication en cours avec la passerelle, chaque module périphérique asservi demeure dans son état désactivé ou endormi et ne bascule automatiquement dans son état actif ou éveillé que toutes les N trames pour détecter la présence éventuelle d'un message (MSG) en provenance de la passerelle et à son intention, ce au moins au début de la cinquième fenêtre (E) de la trame en cours, ledit module périphérique rebasculant dans son état désactivé ou endormi pour les N-1 trames suivantes en cas d'absence d'un tel message, N étant une valeur entière déterminée supérieure ou égale à 2, préférentiellement compris entre 5 et 10, et **en ce que**, lors de l'émission spontanée d'un message (MSG) de la part d'un module périphérique, ledit message (MSG) comprend une indication, en terme de nombre de trames, de la durée de l'état actif ou éveillé en cours pour ledit module.

**6.** Procédé selon la revendication 5, **caractérisé en ce que** toutes les P x N trames la passerelle envoie, durant une cinquième fenêtre (E), un message de synchronisation (CP_SYNCHRO) au, à un ou à tous les module(s) périphérique(s), ce message contenant notamment une information indiquant la prochaine trame pendant laquelle ledit message de synchronisation sera à nouveau envoyé par la passerelle, P étant un entier dont la valeur est fixée par la passerelle.

**7.** Procédé selon l'une quelconque des revendications 1 à 6, **caractérisé en ce que** les émissions du ou des module(s) périphérique(s) dans les deux premières fenêtres (A et B) des trames et les émissions de la passerelle dans la cinquième fenêtre (E) des trames débutent Jt ms avant les débuts respectifs effectifs desdites fenêtres (A, B et E) par l'envoi de préambules non porteurs d'information et de longueur 2 x Jt ms, les émissions de signaux du ou des module(s) périphérique(s) dans la troisième fenêtre (C) des trames débutant également Jt ms avant le début effectif de ladite fenêtre (C) et se poursuivant pendant 2 x Jt ms, Jt étant une valeur fixée lors de l'initialisation du système.

**8.** Procédé selon l'une quelconque des revendications 1 à 7, **caractérisé en ce qu'**il consiste, pour un module périphérique donné faisant partie du système et destiné à établir une liaison synchrone avec la passerelle, à le faire évoluer, le cas échéant de manière répétée, en vue d'une optimisation de la communication, d'un état dissocié dans lequel seule une communication non synchrone sur le canal d'urgence est possible vers un état synchronisé dans lequel une communication bidirectionnelle discontinue par trames synchronisées sur le canal normal est établie entre le module périphérique et la passerelle, puis dudit état synchronisé vers un état asservi dans lequel le lien de communication synchrone est maintenu par calcul et correction des erreurs de synchronisation survenant entre ledit module périphérique et la passerelle, ledit module périphérique retournant dans son état dissocié en cas d'absences répétées d'accusés de réception de la part de la passerelle suite à l'envoi répété de messages (MSG) par ledit module périphérique.

**9.** Procédé selon la revendication 6 et la revendication 8, **caractérisé en ce qu'**il consiste, pour permettre le calcul et la correction des erreurs de synchronisation, à envoyer des messages de synchronisation (CP_SYNCHRO) avec une répétition rapprochée, inférieure à P x N trames, à mesurer au niveau du module périphérique concerné, à chaque nouveau message (CP_SYNCHRO) reçu, une valeur algébrique DELTA E en ms correspondant au recalage nécessaire entre deux trames ayant servi audit module à se recaler, reçues à des instants $T(n-1)$ et $T(n)$ et séparé d'un temps (T), à comparer DELTA E à une valeur limite MAX DELTA E, à calculer la correction en ms : Cr1 = int $[DELTA\ E/T(n) - T(n-1)]$, à appliquer chaque seconde ladite correction Cr1, à reprendre les opérations précitées jusqu'à ce que DELTA E < MAX DELTA E ou $T(n) - T(n-1) > P \times N$ trames.

**10.** Procédé selon la revendication 2 ou l'une quelconque des revendications 4 à 9 pour autant qu'elle dépende de la revendication 3, **caractérisé en ce qu'**il consiste, dans le cas d'un message envoyé par la passerelle à au moins deux modules périphériques, à attribuer à chaque module périphérique destinataire en vue de la transmission d'un message en retour, par exemple un accusé de réception (ACK), un numéro d'ordre, sous la forme de l'attribution d'une sous-fenêtre (TSA0, TSA1 ; TSBO, TSB1) dans la trame ou l'une des trames suivante(s), ladite passerelle réémettant ledit message (MSG) de manière inchangée pendant un nombre de fois prédéterminé en l'absence de réception d'un message d'accusé de réception (ACK) du ou des module(s) périphérique(s) destinataire(s).

**11.** Procédé selon la revendication 10, **caractérisé en ce que** chaque message (MSG) envoyé par la passerelle comporte, en plus d'un en-tête comprenant un identifiant de message (msgId), un ou plusieurs sous-messages (submsg), comprenant chacun un ou plusieurs objet(s) (item) correspondant chacun à un ordre ou une information, chaque sous-message (submsg) pouvant être destiné à un ou plusieurs module(s) périphérique(s).

**12.** Procédé selon la revendication 3 ou l'une quelconque des revendications des revendications 4 à 9 pour autant qu'elle dépende de la revendication 3, **caractérisé en ce qu'**il consiste, en cas d'absence de réception d'un message d'accusé de réception (ACK) suite à un message (MSG) émis par un module périphérique, à autoriser ledit module périphérique à réémettre ledit message dans des sous-fenêtres (TSA0, TSA1 ; TSB0, TSB1) de trames consécutives qui lui sont attribuées selon un tableau d'attribution particulier spécifique transmis au module périphérique concerné par la passerelle dans une phase d'initialisation ou de programmation.

**13.** Procédé selon la revendication 12, **caractérisé en ce qu'**il consiste, à chaque nouvelle émission d'un même message par un module périphérique, à incrémenter l'identifiant du message (msgId), à conserver les identifiants (ItemId) des objets (Item) de la ou des version(s) du même message émis antérieurement et à affecter aux nouveaux objets (Items) du message un identifiant (subItemId) correspondant à l'identifiant dudit nouveau message et **en ce qu'**il consiste, au niveau de la passerelle, à supprimer les objets ou les messages doublons, en exploitant les identifiants (msgId, ItemId et subItemId) des différents messages reçus successivement.

**14.** Procédé selon l'une quelconque des revendications 1 à 13, **caractérisé en ce que**, sur le canal d'urgence, chaque émission spontanée d'un message de la passerelle ou d'un module périphérique perdure pendant une durée correspondant à une trame augmentée de la moitié d'une fenêtre temporelle (TS), le module émetteur demeurant à l'écoute pendant une durée équivalente immédiatement après achèvement de ladite durée d'émission.

**15.** Procédé selon l'une quelconque des revendications 1 à 14, **caractérisé en ce que** le système comprend une passerelle, reliée à l'extérieur, par exemple par une ligne téléphonique commutée, et au moins un, préférentiellement plusieurs, module(s) périphérique(s) choisi(s) dans le groupe formé par les détecteurs et les capteurs de rupture, d'ouverture, de présence, de mouvement, de proximités et volumétriques, les claviers de commande, les télécommandes, les caméras vidéo et analogues.

**16.** Procédé selon la revendication 15, **caractérisé en ce que** le système comprend au moins un détecteur infrarouge dont le nombre de faisceaux à couper avant déclenchement et la sensibilité sont réglables par voie logicielle, la passerelle transmettant audit capteur des valeurs de réglage pour les deux paramètres précités, au moins lors de sa phase d'intégration dans le système.

**17.** Procédé selon l'une quelconque des revendications 15 ou 16, **caractérisé en ce que** le système comprend au moins un détecteur infrarouge présentant un temps de latence bloquant ledit détecteur pendant une durée déterminée après une première détection ou un premier déclenchement, le procédé consistant à adresser audit détecteur infrarouge un message de programmation de suppression dudit temps de latence pendant les états activés ou éveillés du système et des messages d'inhibition dudit capteur pendant les phases désactivées ou endormies du système.

**18.** Procédé selon l'une quelconque des revendications 15 à 17, **caractérisé en ce qu'**il consiste, au niveau de la passerelle, à adresser à tous les modules périphériques un message de désactivation ou de mise en veille forcée, assorti d'une inhibition totale de fonctionnement, ce pour une durée prédéterminée communiquée avec le message ou jusqu'à réception d'un message de réactivation et de désinhibition.

**19.** Système d'alarme comprenant un module central formant passerelle et centrale, reliée à une ligne de télécommunication, par exemple du type téléphonique commutée, et au moins un, préférentiellement plusieurs, module(s) périphérique(s) choisi(s) dans le groupe formé par les détecteurs et les capteurs de rupture, d'ouverture, de présence, de mouvement, de proximités et volumétriques, les claviers de commande, les télécommandes, les caméras vidéo et analogues, ladite passerelle et lesdits modules périphériques comportant chacun une alimentation autonome, **caractérisé en ce qu'**il comporte des moyens, notamment sous la forme de moyens d'émission/réception radiofréquence et de moyens de traitement numérique du type microprocesseur montés dans la passerelle et dans le ou les module(s) périphérique(s), permettant la mise en oeuvre du procédé selon l'une quelconque des revendications 1 à 18.

**20.** Système selon la revendication 19, **caractérisé en ce que** la passerelle comprend des moyens permettant de détecter le décrochement d'un combiné téléphonique qui lui est raccordé et situé sur le lieu d'installation dudit système et de commuter la liaison téléphonique établie, suite au déclenchement d'une alarme, entre la passerelle et un système informatique de réception et de prétraitement des alarmes distant vers ledit combiné, en transformant la liaison porteuse de données numérique en une liaison porteuse de signaux vocaux.

**21.** Système selon l'une quelconque des revendications 19 et 20, **caractérisé en ce que** chaque module périphérique comporte une mémoire d'enregistrement chronologique d'au moins certains évènements, préférentiellement de tous les évènements, survenus au niveau du module concerné, le contenu de cette mémoire pouvant être transféré vers la passerelle sur requête de cette dernière.

**22.** Système selon l'une quelconque des revendications 19 à 21, **caractérisé en ce que** le système comprend au moins un module périphérique asynchrone sous la forme d'un clavier de commande, ce dernier étant équipé d'une interface de transmission infrarouge du type connu sous la désignation IRDA, permettant d'établir une liaison avec un dispositif informatique portable personnel équipé d'une interface analogue, en vue de la commande, de la programmation et du paramétrage du système.

**23.** Système selon l'une quelconque des revendications 19 à 22, **caractérisé en ce que** le système comprend au moins un module périphérique sous la forme d'un détecteur infrarouge, dont le fonctionnement est inhibé pendant les phases d'arrêt ou de désactivation du système, ladite inhibition n'étant effective qu'après occurrence d'une première détection suivant le message comprenant l'ordre d'inhibition émis pat la passerelle, un état de panne ou de dysfonctionnement dudit détecteur étant constaté en cas d'écoulement d'un délai déterminé sans occurrence d'une telle première détection signalée à la passerelle.

**24.** Système selon l'une quelconque des revendications 19 à 23, **caractérisé en ce qu'**au moins un module périphérique sous la forme d'un détecteur de présence situé dans une pièce comportant un poste de télévision est apte à être commandé et à échanger des messages avec un boîtier d'audiomètre, préférentiellement par voie radiofréquence.

**Patentansprüche**

**1.** Verfahren zur bidirektionalen Funkkommunikation in einem Alarm-, Überwachungs- oder Sicherheitssystem, das an einem zu überwachenden Ort installiert ist und aus einerseits einem zentralen Modul besteht, das als Überleitstelle dient, und mindestens einem Peripheriemodul, wobei die genannten Module jeweils eine unabhängige Stromversorgung umfassen, die zwischen einem aktiven oder Wachzustand in einen deaktivierten oder Ruhezustand mit geringem Energieverbrauch und umgekehrt umschalten können, wobei dieses oder jedes dieser Peripheriemodul(e) in diskontinuierlicher, synchroner oder asynchroner Funkverbindung mit der Überleitstelle steht/en und die Übertragungen in Form von Meldungen mit festgelegter Struktur nur zwischen der genannten Überleitstelle und dem oder den Peripheriemodul(en) stattfinden, und zwar über mindestens zwei dedizierte Funkkanäle, nämlich mindestens einen normal genannten Fernmeldekanal für das oder die synchrone(n) oder geführte(n) Peripheriemodul(e) und einen sogenannten Notfernmeldekanal für das oder die asynchrone(n), getrennte(n) oder noch nicht synchronisierte(n) Peripheriemodul(e), wobei die Überleitstelle die Durchführung des Verfahrens und des Betriebs des oder der Peripheriemodul/s/e sicherstellt und als Frequenz- und Zeitnormal für das System dient, wobei der Austausch von Meldungen zwischen der Überleitstelle und dem oder den Peripheriemodul(en) mit Bezug auf aufeinanderfolgende und aneinandergrenzende Zeitrahmen erfolgt, die die Zeit kontinuierlich und gleichartig auf den genannten mindestens zwei Übertragungskanälen aufteilen, Verfahren, **dadurch gekennzeichnet, dass** jeder Rahmen eine kleinere Dauer als 1s hat und in 5 aufeinanderfolgende (A, B, C, D, E) Zeitfenster (TS) unterteilt ist, die vergleichbare Dauer haben; dadurch, dass es darin besteht, auf dem genannten mindestens einen normalen Kanal:

die Sendung des oder der Peripheriemodul/s/e an die Überleitstelle während der beiden ersten Fenster (A und B) im Umfang von einer Meldung (MSG) je Peripherimodul zu autorisieren;
auf dem Niveau der Überleitstelle während des dritten Fensters (C) jedes Rahmens die Existenz einer möglichen spontanen Sendung eines oder mehrerer Peripheriemodul/s/e während mindestens eines der beiden ersten Fenster (A und B) des folgenden Rahmens zu prüfen;
die Sendung von der Überleitstelle an ein, mehrere oder alle Peripheriemodul(e) während des fünften Fensters (E) zu autorisieren;
dadurch, dass der Gebrauch des vierten Fensters (D) dynamisch und in Echtzeit von der Überleitstelle gesteuert wird,
jede von der Überleitstelle oder jedem Peripheriemodul empfangene Meldung (MSG) zur Sendung einer Empfangsbestätigung (ACK) zum aussendenden Modul zurück führt,
dadurch, dass die Überleitstelle während des dritten Fensters (C) jedes Rahmens, mindestens während einer begrenzten Zeit zu Beginn dieses Fensters (C) eine Messung der Stärke der empfangenen Funksignale, RSSI, mindestens auf dem Notkanal ausführt, und dadurch, dass die genannte Überleitstelle mindestens während eines begrenzten Zeitraums zu Beginn der beiden ersten Fenster (A und B) des folgenden Rahmens auf Empfang geschaltet ist, wenn die genannte gemessene Stärke RSSI größer oder gleich einem festgelegten Schwellenwert RSSImin ist, wobei jedes Peripheriemodul, das spontan während eines gegebenen Rahmens senden möchte, während des dritten Fensters (C) des vorangehenden Rahmens, insbesondere mindestens während einer begrenzten Dauer zu Beginn dieses Fensters (C), ein Funksignal ausreichender Stärke aussendet, damit die von der Überleitstelle gemessene Stärke RSSI größer ist als RSSImin.

2. Verfahren nach Patentanspruch 1, **dadurch gekennzeichnet, dass** die Länge eines Rahmens ungefähr 625 ms beträgt, wobei jede von der Überleitstelle ausgegebene Empfangsbestätigung sofort nach Empfang während des Fensters (A, B) der Sendung der Meldung (MSG), deren Empfang zu bestätigen ist, gesendet wird und jede Empfangsbestätigung (ACK), die von dem oder den Peripheriemodul(en) ausgegeben wird, während eines der Fenster (A, B) des auf den das Fenster (E) der Sendung der Meldung (MSG), deren Empfang zu bestätigen ist, folgenden Rahmens gesendet wird.

3. Verfahren nach Patentanspruch 2, **dadurch gekennzeichnet, dass** jedes der beiden ersten Fenster (A und B) in zwei Teile unterteilt ist, die jeweils aus einem ersten Zeitintervall oder Unterfenster bestehen, das der Sendung einer Meldung (MSG) eines Peripheriemoduls zur Überleitstelle dient, und einem zweiten Zeitintervall, das der Sendung einer Empfangsbestätigung (ACK) der Überleitstelle an das Peripheriemodul, das die Meldung (MSG) während des ersten Zeitintervalls desselben Teils gesendet hat, dient, und dadurch, dass jede von einem Peripheriemodul gesendete Meldung (MSG) zusätzlich zu einem Kopf, der eine Kennung der Meldung (msgld) enthält, einen oder mehrere Objekte oder Informationen (Item) enthält, die jeweils mindestens einem Teil einer Antwort an die Überleitstelle oder einer spontanen Meldung des genannten Peripheriemoduls entsprechen, wobei jedes Objekt durch eine Kennung (itemld, subitemld) gekennzeichnet ist.

4. Verfahren nach Patentanspruch 3, **dadurch gekennzeichnet, dass** bei ausbleibender Detektion eines einer Meldung (MSG) oder einer Empfangsbestätigung (ACK) entsprechenden Signals zu Beginn der Fenster (A und B) für die Überleitstelle oder zu Beginn des Fensters (E) für das oder die Peripheriemodul(e), diese Module in ihren deaktivierten oder Ruhezustand geringen Verbrauchs übergehen.

5. Verfahren nach irgendeinem der Patentansprüche 1 bis 4, **dadurch gekennzeichnet, dass** jedes geführte Peripheriemodul bei Abwesenheit einer laufenden Kommunikation mit der Überleitstelle in seinem deaktivierten oder Ruhezustand verharrt und nur alle N Rahmen automatisch in seinen aktiven oder Wachzustand übergeht, um das eventuelle Vorliegen einer von der Überleitstelle stammenden Meldung (MSG) an es festzustellen, und zwar mindestens zu Beginn des fünften Fensters (E) des laufenden Rahmens, wobei das genannte Peripheriemodul bei Abwesenheit einer derartigen Meldung wieder für die N-1 folgenden Rahmen in seinen deaktivierten oder Ruhezustand zurückkehrt, wobei N eine festgelegte ganze Zahl größer oder gleich 2 ist, vorzugsweise zwischen 5 und 10 liegt, und dadurch, dass bei spontaner Sendung einer Meldung (MSG) seitens eines Peripherimoduls die genannte Meldung (MSG) eine Angabe in Rahmenanzahl der Dauer des laufenden aktiven oder Wachzustandes des genannten Moduls umfasst.

6. Verfahren nach Patentanspruch 5, **dadurch gekennzeichnet, dass** die Überleitstelle alle PxN Rahmen während eines fünften Fensters (E) eine Synchronisationsmeldung (CP_SYNCHRO) an das, ein oder alle Peripheriemodul(e) sendet, wobei diese Meldung insbesondere eine Information enthält, die den nächsten Rahmen anzeigt, während dessen die genannte Synchronisationsmeldung von der Überleitstelle erneut gesendet wird, wobei P eine ganze Zahl ist, deren Wert von der Überleitstelle festgelegt wird.

7. Verfahren nach irgendeinem der Patentansprüche 1 bis 6, **dadurch gekennzeichnet, dass** die Sendungen des oder der Peripheriemodul/s/e in den beiden ersten Fenstern (A und B) der Rahmen und die Sendungen der Überleitstelle im fünften Fenster (E) der Rahmen Jt ms vor dem jeweiligen tatsächlichen Beginn der genannten Fenster (A, B und E) mit der Sendung von keine Daten enthaltenden und 2xJt ms langen Präambeln beginnen, wobei die Sendungen von Signalen des oder der Peripheriemodul/s/e im dritten Fenster (C) der Rahmen ebenfalls Jt ms vor dem tatsächlichen Beginn des genannten Fensters (C) beginnen und sich während 2xJt ms fortsetzen, wobei Jt ein Wert ist, der bei der Initialisierung des Systems festgelegt wird.

8. Verfahren nach irgendeinem der Patentansprüche 1 bis 7, **dadurch gekennzeichnet, dass** es für ein gegebenes Peripheriemodul, das Bestandteil des Systems ist und dafür bestimmt ist, eine Synchronverbindung mit der Überleitstelle aufzubauen, darin besteht, es gegebenenfalls wiederholt mit dem Ziel einer Optimierung der Kommunikation von einem getrennten Zustand, in dem nur eine nicht synchrone Kommunikation auf dem Notkanal möglich ist, zu einem synchronisierten Zustand zu entwickeln, in dem eine diskontinuierliche, bidirektionale Kommunikation mit synchronisierten Rahmen auf dem Normalkanal zwischen dem Peripheriemodul und der Überleitstelle hergestellt ist, und dann vom genannten synchronisierten Zustand zu einem geführten Zustand, in dem die Synchronkommunikationsverbindung durch Berechnung und Korrektur von Synchronisationsfehlern aufrechterhalten wird, die zwischen dem genannten Peripheriemodul und der Überleitstelle auftreten, wobei das genannte Peripheriemodul im Fall wiederholten Ausfalls von Empfangsbestätigungen seitens der Überleitstelle nach wiederholter Sendung von Meldungen (MSG) durch das genannte Peripheriemodul in seinen getrennten Zustand zurückkehrt.

9. Verfahren nach Patentanspruch 6 und Patentanspruch 8, **dadurch gekennzeichnet, dass** es zur Ermöglichung der Berechnung und Korrektur der Synchronisationsfehler darin besteht, Synchronisationsmeldungen (CP_SYNCHRO) mit häufiger Wiederholung, geringer als PxN Rahmen, zu senden, auf dem Niveau des betroffenen Peripheriemoduls bei jeder neuen empfangenen Meldung (CP_SYNCHRO) eine algebraische Größe DELTA E in ms zu messen, die dem erforderlichen Ausrichtbetrag entspricht, der zur Ausrichtung zwischen zwei Rahmen erforderlich ist, die dem Modul dazu gedient haben, sich auszurichten, die zu Zeitpunkten T(n-1) und T(n) empfangen wurden und durch ein Zeitintervall (T) voneinander getrennt sind, DELTA E mit einem Grenzwert MAXDELTA E zu vergleichen, die Korrektur in ms: Cr1 = int [DELTA E/T(n) - T(n-1]] zu berechnen, jede Sekunde die genannte Korrektur Cr1 vorzunehmen, die genannten Schritte zu wiederholen, bis DELTA E < MAXDELTA E oder T(n)-T(n-1) > PxN Rahmen.

10. Verfahren nach Patentanspruch 2 oder nach irgendeinem der Patentansprüche 4 bis 9, insoweit er von Patentanspruch 3 abhängt, **dadurch gekennzeichnet, dass** es im Fall einer von der Überleitstelle an mindestens zwei Peripheriemodule gesendeten Meldung darin besteht, jedem Empfänger-Peripheriemodul zur Übertragung einer Rückmeldung, wie beispielsweise einer Empfangsbestätigung (ACK), eine Ordnungsnummer zuzuteilen, in Form einer Zuordnung eines Unterfensters (TSA0, TSA1; TSBO, TSB1) im oder einem der folgenden Rahmen, wobei die genannte Überleitstelle bei ausbleibendem Empfang einer Empfangsbestätigung (ACK) des oder der Empfänger-Peripheriemodul/s/e die genannte Meldung (MSG) unverändert mit einer festgelegten Anzahl an Wiederholungen erneut sendet.

11. Verfahren nach Patentanspruch 10, **dadurch gekennzeichnet, dass** jede von der Überleitstelle gesendete Meldung (MSG) zusätzlich zum eine Kennung der Meldung (msgld) enthaltenden Kopf eine oder mehrere Teilmeldungen (submsg) enthält, die jeweils eines oder mehrere Objekte (item) enthalten, die jeweils einer Anweisung oder einer Information entsprechen, wobei jede Teilmeldung (submsg) für ein oder mehrere Peripheriemodul(e) bestimmt sein kann.

12. Verfahren nach Patentanspruch 3 oder irgendeinem der Patentansprüche 4 bis 9, insoweit sie vom Patentanspruch 3 abhängen, **dadurch gekennzeichnet, dass** es im Fall des ausbleibenden Empfangs einer Empfangsbestätigung (ACK) auf eine von einem Peripheriemodul gesendete Meldung (MSG) darin besteht, dem genannten Peripheriemodul zu erlauben, die genannte Meldung in Unterfenstern (TSA0, TSA1; TSBO, TSB1) nachfolgender Rahmen erneut zu senden, die ihm nach einer besonderen, spezifischen Zuweisungstabelle zugewiesen sind, die dem betroffenen Peripheriemodul von der Überleitstelle in einer Initialisierungs- oder Programmierungsphase übertragen wurde.

13. Verfahren nach Patentanspruch 12, **dadurch gekennzeichnet, dass** es darin besteht, bei jeder erneuten Sendung einer Meldung durch ein Peripheriemodul die Kennung der Meldung (msgld) zu inkrementieren, die Kennungen (Itemld) der Objekte (Item) der Version(en) derselben, früher gesandten Meldung zu bewahren und den neuen Objekten (Items) der Meldung eine Kennung (subltemld) hinzuzufügen, die der Kennung der genannten neuen Meldung entspricht, und dadurch, dass es auf dem Niveau der Überleitstelle darin besteht, die doppelten Objekte oder Meldungen zu löschen, indem die Kennungen (msgld, Itemld und subltemld) der verschiedenen, nacheinander empfangenen Meldungen ausgewertet werden.

14. Verfahren nach irgendeinem der Patentansprüche 1 bis 13, **dadurch gekennzeichnet, dass** auf dem Notkanal jede spontane Sendung einer Meldung der Überleitstelle oder eines Peripheriemoduls ein Zeitintervall dauert, das einem Rahmen, verlängert um die Hälfte eines Zeitfensters (TS), dauert, wobei das sendende Modul während eines gleichen Zeitintervalls anschließend an das Ende der genannten Sendedauer empfangsbereit bleibt.

15. Verfahren nach irgendeinem der Patentansprüche 1 bis 14, **dadurch gekennzeichnet, dass** das System eine Überleitstelle, die beispielsweise über eine Telephon-Wählverbindung nach außen verbunden ist, und mindestens ein, vorzugsweise mehrere Peripheriemodule umfasst, ausgewählt aus der Gruppe, bestehend aus Bruch-, Öffnungs-, Anwesenheits-, Bewegungs-, Annäherungs-, Raumüberwachungsdetektoren und -sensoren, Bedienungstastaturen, Fernbedienungen, Videokameras und dergeleichen.

16. Verfahren nach Patentanspruch 15, **dadurch gekennzeichnet, dass** das System mindestens einen Infrarotdetektor umfasst, dessen vor Auslösung zu unterbrechende Strahlenzahl und Empfindlichkeit über Software einstellbar sind, wobei die Überleitstelle dem genannten Sensor Einstellwerte für die beiden genannten Parameter übermittelt, mindestens in der Phase seines Einbaus in das System.

17. Verfahren nach irgendeinem der Patentansprüche 15 oder 16, **dadurch gekennzeichnet, dass** das System mindestens einen Infrarotdetektor umfasst, der eine Latenzzeit, die den genannten Detektor für eine festgelegte Zeit nach einer ersten Detektion oder einer ersten Auslösung blockiert, aufweist, wobei das Verfahren darin besteht, an den genannten Infrarotdetektor eine Programmiermeldung zur Unterdrückung der genannten Latenzzeit während der aktiven oder Wachzustände des Systems zu richten, und Meldungen zur Sperrung des genannten Sensors während der deaktivierten oder Ruhezustände des Systems.

18. Verfahren nach irgendeinem der Patentansprüche 15 bis 17, **dadurch gekennzeichnet, dass** es auf dem Niveau der Überleitstelle darin besteht, allen Peripheriemodulen eine Meldung zur erzwungenen Deaktivation oder Übergang in die Ruhestellung, verbunden mit einer vollständigen Funktionsunterbrechung, für eine festgelegte Zeit, die mit der Meldung mitgeteilt wird, oder bis zum Empfang einer Reaktivierungs- und Entsperrmeldung, zu senden.

19. Alarmsystem, ein Zentralmodul umfassend, das als Überleitstelle und Zentrale dient, verbunden mit einer Fernmeldeverbindung, beispielsweise der Art einer Telephonwählverbindung, und mindestens ein, vorzugsweise mehrere Peripheriemodul(e), ausgewählt aus der Gruppe, bestehend aus Bruch-, Öffnungs-, Anwesenheits-, Bewegungs-, Annäherungs-, Raumüberwachungsdetektoren und -sensoren, Bedienungstastaturen, Fernbedienungen, Videokameras und dergleichen, wobei die genannte Überleitstelle und die genannten Peripheriemodule jeweils eine unabhängige Versorgung aufweisen, **dadurch gekennzeichnet, dass** es Mittel aufweist, insbesondere in Form von Funk-Sende-/ Empfangsmitteln und digitalen Verarbeitungsmitteln vom Typ Mikroprozessor, die in der Überleitstelle und dem oder den Peripheriemodul(en) montiert sind, die die Ausführung des Verfahrens nach irgendeinem der Patentansprüche 1 bis 18 erlauben.

20. System nach Patentanspruch 19, **dadurch gekennzeichnet, dass** die Überleitstelle Mittel umfasst, die erlauben, das Abheben eines Telephonhörers festzustellen, der mit ihr verbunden ist und sich am Ort der Installation des genannten Systems befindet, und die nach Auslösung eines Alarms zwischen der Überleitstelle und einem Informatiksystem zum Empfang und zur Vorverarbeitung von fernen Alarmmeldungen hergestellte Telephonverbindung auf den genannten Hörer, unter Umschaltung der Digitaldatenverbindung in eine Sprachsignalverbindung, zu schalten.

21. System nach irgendeinem der Patentansprüche 19 und 20, **dadurch gekennzeichnet, dass** jedes Peripheriemodul einen Speicher zur chronologischen Aufzeichnung mindestens bestimmter Ereignisse umfasst, vorzugsweise aller Ereignisse, die am betroffenen Modul eingetreten sind, wobei der Inhalt dieses Speichers auf Anfrage der Überleitstelle an diese übermittelt werden kann.

22. System nach irgendeinem der Patentansprüche 19 bis 21, **dadurch gekennzeichnet, dass** das System mindestens ein asynchrones Peripheriemodul in Form einer Bedienungstastatur umfasst, wobei diese mit einer Infrarotübertragungsschnittstelle der unter der Bezeichnung IRDA bekannten Art ausgestattet ist, die erlaubt, zur Bedienung, Programmierung und Parametrierung des Systems eine Verbindung mit einer tragbaren, persönlichen Informatikvorrichtung herzustellen, die mit einer entsprechenden Schnittstelle ausgestattet ist.

23. System nach irgendeinem der Patentansprüche 19 bis 22, **dadurch gekennzeichnet, dass** das System mindestens ein Peripheriemodul in Form eines Infrarotdetektors umfasst, dessen Funktion während der Abschalt- oder Deaktivierungsphasen des Systems gesperrt wird, wobei die genannte Sperrung erst nach Stattfinden einer ersten Detektion nach der Meldung wirksam ist, die die Sperranweisung enthält, die von der Überleitstelle gesendet wurde, wobei im Fall des Ablaufs einer festgelegten Zeitspanne ohne Stattfinden einer derartigen ersten Detektion, die der Überleitstelle gemeldet wird, ein Ausfall oder eine Funktionsstörung des genannten Detektors festgestellt wird.

24. System nach irgendeinem der Patentansprüche 19 bis 23, **dadurch gekennzeichnet, dass** mindestens ein Peripheriemodul in Form eines Anwesenheitsmelders in einem Zimmer, das einen Fernsehempfänger enthält, geeignet ist, gesteuert zu werden und mit einem Audiometer Meldungen auszutauschen, vorzugsweise per Funk.

**Claims**

1. Method for bidirectional radio communication in an alarm system, surveillance or security system, installed at a site to be monitored and comprising on the one hand a central module forming a gateway and on the other hand at least one peripheral module, said modules each having an independent power supply, able to switch from an active or alert state to a deactivated or standby state with a low power consumption and vice versa, said or each of the peripheral modules being in discontinuous synchronous or asynchronous radio connection with the gateway, and the transmissions in the form of messages with defined structures only occurring between said gateway and the peripheral module or modules, over at least two dedicated radiofrequency channels, namely at least one communication channel which is normal for the synchronous or servo peripheral module(s) and an emergency communication channel for the asynchronous, disconnected or not yet synchronised peripheral module or modules, the gateway ensuring the management of the method and functioning of the peripheral module or modules and being used as a frequency and time reference for the system, the exchange of messages between the gateway and peripheral module or modules being performed in consecutive and contiguous time frames, dividing the time in a continuous and similar manner on said at least two transmission channels, the method being **characterised in that** each frame has a duration of less than 1s and is subdivided into five successive time windows (TS) (A, B, C, D, E) of similar duration; **in that** it consists on said at least one normal channel of

   - authorising the emission of the peripheral module or modules towards the gateway during the two first windows (A and B), due to a message (MSG) via peripheral module;
   - verifying at the gateway during the third window (C) of each frame the existence of a possible spontaneous emission or one or more peripheral module(s) during at least one of the two first windows (A and B) of the following frame;
   - authorising the emission of the gateway to one, several or all of the peripherals during the fifth window (E);
   - **in that** the use of the fourth window (D) is managed in a dynamic manner and in real time by the gateway, each message (MSG) received by the gateway or each peripheral module triggers the emission back towards to the transmitter module of an acknowledgement message (ACK),
   **in that** the gateway carries out during the third window (C) of each frame, at least during a limited period at the beginning of said window (C), a measurement of the level of intensity or power of the radio signals received, RSSI, at least on the emergency channel, and **in that** said gateway is activated in reception, at least during a limited period at the beginning of the two first windows (A and B) of the following frame, when said measured level, RSSI, is greater than or equal to a predetermined threshold value, RSSI min, each peripheral module wishing to emit spontaneously during a given emitting frame during the third window (C) of the preceding frame, in particular at least during a limited period at the beginning of said window (C) a radio signal of sufficient power that the RSSI level measured by the gateway is greater than RSSI min.

2. Method according to claim 1, **characterised in that** the duration of a frame is about 625 ms, each acknowledgement message emitted by the gateway being sent immediately after reception during the window (A, B) for sending the message (MSG), the reception of which needs to be confirmed and each message of acknowledgement (ACK) emitted by the peripheral module or modules being sent during one of the windows (A, B) of the following frame comprising the window (E) for sending the message (MSG) for which reception needs to be confirmed.

3. method according to claim 2, **characterised in that** each of the two first windows (A and B) is subdivided into two parts, each of which is formed by a first time period or sub-window concerned with the emission of a message (MSG) of a peripheral module towards the gateway and a second time period concerned with the emission of an acknowledgement message (ACK) from the gateway to the peripheral module having emitted the message (MSG) during the first time period belonging to this same part and **in that** each message (MSG) emitted by a peripheral module comprises, in addition to a header comprising a message identifier (msgld), one or more objects or information (Item) each corresponding to at least one part of a response to the gateway or a spontaneous message of said peripheral module, each object being identified by an identifier (itemld), subitemld).

4. Method according to claim 3, **characterised in that** the absence of detection of a signal corresponding to a message (MSG) or an acknowledgement message (ACK) at the beginning of the windows (A and B) for the gateway or at the beginning of the window (E) for the peripheral module or modules, said modules switching into their low power deactivated or standby mode.

5. Method according to any one of claims 1 to 4, **characterised in that** in the absence of ongoing communication with the gateway, each peripheral servo module remains in its deactivated or standby mode and only shifts automatically into its active or alert state when all of the N frames for detecting the possible presence of a message (MSG) from the gateway and for it, at least at the beginning of the fifth window (E) of the current frame, said peripheral module reshifting into its deactivated or standby mode for the following N-1 frames in the absence of such a message, N being an integer greater than or equal to 2, preferably between 5 and 10, and **in that** during the spontaneous emission of a message (MSG) from a peripheral module, said message (MSG) comprises an indication in terms of the number of frames of the duration of the active or alert mode for said module.

6. Method according to claim 5, **characterised in that** all of the P x N frames of the gateway send, during a fifth window (E), a synchronisation message (CP_SYNCHRO) to one or all of the peripheral modules, said message containing in particular information indicating the next frame during which said synchronisation message will again be sent by the gateway, P being an integer the value of which is fixed by the gateway.

7. Method according to any one of claims 1 to 6, **characterised in that** the emissions of the peripheral module or modules in the two first windows (A and B) of the frames and emissions of the gateway in the fifth window (E) of the frames begin Jt ms before the respective effects beginnings of said windows (A, B and E) by sending preambles which do not carry information and have a length 2 x Jt ms, the emissions of signals of the peripheral module or modules in the third window (C) of the frames also starting Jt ms having the effective start of said window (C) and following for 2 x Jt ms, Jt being a fixed value during the set-up of the system.

8. Method according to any one of claims 1 to 7, **characterised in that** it consists for a given peripheral module forming part of the system and designed to establish a synchronous connection to the gateway, of making it change, if necessary in a repeated manner, with a view to optimising the communication, from a disconnected state in which only non-synchronous communication is possible on the emergency channel to a synchronised state in which discontinuous bidirectional communication by synchronised frames on the normal channel is established between the peripheral module and the gateway, then said synchronised state towards a servo mode in which the synchronous communication line is maintained by calculating and correcting the errors of synchronisation between said peripheral module and the gateway, said peripheral module returning to its disconnected state in the repeated absence of acknowledgements from the gateway following the repeated sending of message (MSG) by the peripheral module.

9. Method according to claim 6 and claim 8, **characterised in that** for permitting the calculation and correction of synchronisation errors it consists of sending synchronisation messages (CP_SYNCHRO) with a close repetition, less than P x N frames, measuring for the peripheral module concerned, with each new message (CP_SYNCHRO) received, an algebraic value DELTA E in ms corresponding to the required resetting between two frames used for said module to reset, received at moments T(n-1) and T(n) and separated by a time (T), comparing DELTA E with a limit value MAX DELTA E, calculating the correction in ms: Cr1 = int [DELTA E/T(n) - T(n-1)], applying each second said correction Cr1, resuming the aforementioned operations until DELTA E < MAX DELTA E or T(n) - T(n-1) > P x N frames.

10. Method according to claim 2 or any one of claims 4 to 10 insofar as it is dependent on claim 3, **characterised in that** it consists in the case of message sent by the gateway to at least two peripheral modules of attributing to each destination peripheral module for the transmission of a return message, for example an acknowledgement message (ACK), an order number, in form of the attribution of a sub-window (TSA0, TSA1; TSBO, TSB1) in the frame or one of the following frames, said gateway re-emitting said message (MSG) in an unchanged manner for a number of times predetermined in the absence of receiving an acknowledgement message (ACK) from the peripheral destination module or modules.

11. Method according to claim 10, **characterised in that** each message (MSG) sent by the gateway comprises, in addition to a header comprising an identifier of the message (msgld), one or more submessages (submsg), each comprising one or more object(s) (item) each corresponding to an order or a piece of information, each submessage (submsg) being able to be sent to one or more peripheral modules.

12. Method according to claim 3 or any one of claims 4 to 9 insofar as they depend on claim 3, **characterised in that** it consists, in the absence of receiving an acknowledgement message (ACK) following the message (MSG) emitted by a peripheral module, of authorising said peripheral module to resend said message in the subwindows (TSA0, TSA1; TSBO, TSB1) of consecutive frames which are attributed to the latter according to a particular specific attribution table transmitted to the peripheral module concerned by the gateway in an initialisation or programming phase.

**13.** Method according to claim 12, **characterised in that** it consists, with each new emission of the same message by a peripheral module, of increasing the identifier of the message (msgld), conserving the identifiers (Itemld) of the objects (Item) of the version or version(s) of the same message emitted previously and assigning to new objects (Items) of the message an identifier (subltemld) corresponding to the identifier of said new message and **in that** it consists at the gateway of supressing the duplicate objects or messages, by using identifiers (msgld, Itemld and subltemld) of different messages received successively.

**14.** Method according to any one of claims 1 to 13, **characterised in that** on the emergency cable each spontaneous emission of a message from the gateway or a peripheral module lasts for a period corresponding to a frame increased by half of a time window (TS), the emitter module remaining attentive during an equivalent period immediately after completing the said emission period.

**15.** Method according to any one of claims 1 to 14, **characterised in that** the system comprises a gateway, connected to the outside, for example, by a dial-up telephone line, and at least one, preferably several, peripheral modules selected from a group formed by detectors and breakage sensors, opening sensors, presence sensors, movement sensors, proximity and volumetric sensors, control boards, remote controls, video cameras and the like.

**16.** Method according to claim 15, **characterised in that** the system comprises at least one infrared detector the number of beams to be cut prior to triggering and the sensitivity of which are controlled by software, the gateway transmitting to said sensor control values for the two aforementioned parameters, at least during its integration phase into the system.

**17.** Method according to any one of claims 15 or 16, **characterised in that** the system comprises at least one infrared detector having a latency period blocking said detector for a defined period after a first detection or a first triggering, the method consisting of addressing to said infrared detector a programming message for suppressing said latency time during the activated or alert states of the system and messages for the inhibition of said sensor during the deactivated or standby phases of the system.

**18.** Method according to any one of claims 15 to 17, **characterised in that** it consists at the gateway of addressing to all of the peripheral modules a deactivation message or forced standby mode, accompanies by a total suppression of function, for a predetermined period communicated with the message or until receiving a message of reactivation and removal of suppression of function.

**19.** Alarm system comprising a central module forming a gateway and power point, connected to a telecommunications line, for example of the telephone dial-up type, and at least one, preferably a plurality of peripheral modules selected from the group formed by break detectors and sensors, opening sensors, presence sensors, movement sensors, proximity sensors and volumetric sensors, control boards, remote controls, video cameras and the like, said gateway and said peripheral modules each having an independent power supply, **characterised in that** it comprises means, in particular in the form of radio emission/reception means and digital microprocessor processing means mounted in the gateway and in the peripheral module or modules, allowing the implementation of the method according to any one of claims 1 to 18.

**20.** System according to claim 19, **characterised in that** the gateway comprises means making it possible to detect the disconnection of a phone handset which is connected to the latter and located at the installation site of said system and to switch the established phone connection, following the triggering of an alarm, between the gateway and a computer system for receiving and pre-processing remote alarms towards said handset, by transforming the carrier connection of digital data into a carrier connection of voice signals.

**21.** System according to any one of claims 19 and 20, **characterised in that** each peripheral module comprises a chronological recording memory for at least some events, preferably all events, occurring at the module concerned, the content of said memory being able to be transferred to the gateway at the request of the latter.

**22.** System according to any one of claims 19 to 21, **characterised in that** the system comprises at least one asynchronous peripheral module in the form of a control board, the latter being equipped with and infrared transmission interface of the known kind with the brand name IRDA, which makes it possible to establish a connection with a portable personal computer equipped with an analogue interface, with a view to controlling, programming and configuring the system.

**23.** System according to any one of claims 19 to 22, **characterised in that** the system comprises at least one peripheral module in the form of an infrared detector, the functioning of which is inhibited during the stop or deactivation phases of the system, said inhibition only being effective after a first detection following the message comprising the inhibition order emitted by the gateway, a faulty or dysfunctional state of said detector being determined after the expiry of a period determined without occurrence of such a first detection signalled to the gateway.

**24.** System according to any one of claims 19 to 23, **characterised in that** at least one peripheral module in the form of a presence detector located in a room comprising a television set is able to be controlled and exchange messages with an audiometer, preferably by radiofrequency channel.

FIG 1

FIG 2

A                      B

62,5ms                                   62,5ms

Msg0    Ack0     Msg1    Ack1    Msg2    Ack2    Msg3    Ack3

## FIG 3

E'

A         B         C         D         E

passerelle

périphérique

A'         B'         C'

## FIG 4

FIG5

Trame 2

Trame 1

Trame 0

M0

M1

M2

M0

FIG6

A  B  C  D  E

A  B  C  D  E

Demande émission périph G ,H,I,J

Emission périph G

Emission périph H

Emission périph I

Emission périph J

A    B    C    D    E    A    B    C    D    E

Emission pendant 690ms

Ecoute pendant 690ms

Périphérique asynchrone

ACK pris en compte.

# FIG 7

| msgId | subItemId0 | subItemId1 | .. | .. | subItemIdN |
|---|---|---|---|---|---|

Dernier Id reçu

msgId

# FIG 8

Asservi

Problème d'acquittement des
messages malgré plusieurs tentatives.

Critères de correction
ERREUR OK.

Problème d'acquittement des
messages malgré plusieurs tentatives.

Synchronisé

Dissocié

Msg
CP_CHGE_CHANNEL

# FIG 9

Passerelle

Périphérique

Msg synchro

Canal Cx

60sec

Msg synchro

60sec

Msg synchro

Tsync

Tevent

Talert

Périphérique passe en écoute
Permanente.

Tlisten.

Passage dans l'état dissocié.

FIG 10

Emission de sous synchro.

>120sec.

T0

T1

Tn-1

Tn

Asservi

FIG 11

Associé

Non associé

MSG Chge Channel

Attente msg

La passerelle synchronise

Cas normal

Délai

Synchronisé

brouillage

Emission
dans Cu

Non synchro

ASSERVI

# FIG 12

| 1 | CP_SUPERVISION |
|---|---|

| 1 | ACK(1) | 1 | STATUS(1) | 1 |
|---|---|---|---|---|

| 2 | ACK |
|---|---|

| 3 | CP_SUPERVISION |
|---|---|

| 2 | EVENT(3) | 2 | STATUS(1) | 2 | ACK(1) | 2 |
|---|---|---|---|---|---|---|

| 2 | EVENT(2) | 3 |
|---|---|---|

# FIG 13

| 2 | EVENT(1) | 4 |
|---|---|---|

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- GSM System for Mobile Communications, publié à Lassay-les-Châteaux par Europe Media. **M. MOULY et al.** Radio Resource Management. 1993, 186-259, 308-430